# EUROPÄISCHE PATENTANMELDUNG

(11) **EP 2 012 227 A1**
(43) Veröffentlichungstag der Anmeldung: **07.01.2009**
(21) Anmeldenummer: 07012983.8
(22) Anmeldetag: 03.07.2007
(51) Int. Cl.: G06F 9/44

(54) **Programmieroberfläche zum Programmieren von Computern**

(71) Anmelder: Renner, Peter, 51515 Kürten (DE)
(72) Erfinder: Renner, Peter, 51515 Kürten (DE)
(74) Vertreter: Nau, Walter

(57) **Zusammenfassung**

Die Erfindung betrifft ein computergestütztes Verfahren und System zur imperativen Programmierung von Computern mit mehreren Programmanweisungen umfassendem Programmcode, wobei Schlüsselworte (Platzhalter) und Auswahllisten (Kontextmenüs) vorgesehen sind, mit einer grafischen Benutzeroberfläche (GUI, Graphical User Interface), wobei im wesentlichen erfindungsgemäß vorgesehen ist, dass sich Programmanweisungen aus Operationen und Objekten zusammensetzen, wobei Objekte adressierbar sind sowie Operationen und Objekte aus Auswahllisten ausgewählt werden.

## Beschreibung

Die Erfindung bezieht sich auf ein Verfahren und ein System zum Erstellen von Programmcode auf der Basis imperativer Sprachen gemäß den Merkmalen des Oberbegriffes des jeweiligen unabhängigen Patentanspruches 1 und 21.

Bei diesem Sprachentyp werden die Programmanweisungen sequentiell abgearbeitet. Es handelt sich ferner um prozedurale Sprachen. Bei den prozeduralen Sprachen werden die Anweisungen in Blöcken (Prozeduren) gekapselt, um unerwünschte Nebenwirkungen der Anweisungsblöcke untereinander zu vermeiden. Weiterhin benutzt die Erfindung eine grafische Benutzeroberfläche, die als GUI (Graphical User Interface) bezeichnet wird. Sie ermöglicht eine Interaktion des Benutzers (Mensch-Maschine-Schnittstelle), die auch als Bedien- und Beobachtungsschnittstelle bezeichnet wird.

Bei prozeduralen Sprachen können, wie es zum Beispiel bei einer verbreiteten Sprache (Visual Basic) der Fall ist, die Anweisungen einer Prozedur in einer vom System vorgegebenen Anfangs- und Endzeile gekapselt sein, wobei diese Zeilen vom System automatisch erzeugt werden. Dies kann dadurch geschehen, dass in einem graphischen Objekt einer Visualisierungsoberfläche ein Ereignis (z. B. eine Benutzereingabe) erfolgt, wodurch das Gerippe der Prozedur, bestehend aus einer Anfangs- und Endzeile, automatisch erzeugt wird.

Die modernen Programmiersprachen wurden für Programmierer gemacht. Daraus resultiert, dass das Programmieren so kompliziert wurde, dass es nur noch Spezialisten vorbehalten ist. Die verfügbaren Sprachen sind außerdem formalistisch. Ein Anwender, der ein Programm in einer solchen Sprache schreibt, muss einen Formalismus (Syntax) einhalten. Wenn er bei der Erstellung von Anweisungen gegen diesen Formalismus verstösst, werden Syntaxfehler angezeigt. Erst wenn Syntaxfehler aufwändig behoben wurden, werden die Anweisungen akzeptiert. Diese unterschiedlichen Programmiersprachen unterscheiden sich letztlich durch den jeweiligen sprachenbezogenen Formalismus. Somit unterscheiden sich die verschiedenen Programmiersprachen wie Java, C++ oder Turbopascal durch ihren komplizierten Formalismus.

Die Handbücher der einzelnen Programmiersprachen umfassen viele 100 Seiten, die sich mit den Anweisungen und dem individuellen Sprachensyntax beschäftigen. Die Anzahl der verfügbaren Anweisungen ist bei den komplexen Sprachen unübersichtlich. Unabhängige Literaturen, die sich mit Anwendungen und Beispielen beschäftigen, sind in grosser Zahl verfügbar. Dies zeigt, wie schwierig es geworden ist, Ideen in Computerprogramme umzusetzen. Letztlich ist die Qualität der Programme in hohem Masse von der Fähigkeit der Softwareentwickler abhängig.

Die Syntaxlastigkeit und die Schwierigkeit des Auffindens und Anwenden zweckmässiger Befehle in einer konkreten Programmiersituation führt dazu, dass die Softwareentwickler in hohem Maße von ihrer eigentlichen Programmieraufgabe abgelenkt werden. Ein großer Teil der geistigen Kapazität der Softwareentwickler wird somit in eine falsche Richtung gelenkt, die dem eigentlichen Zweck undienlich ist, nämlich Prozesse in einem Computer abzubilden bzw. zu simulieren.

Die Aufgabe, die sich die Erfindung gestellt hat, ist es, dem Softwareentwickler die volle Konzentration auf die Programmieraufgabe zu ermöglichen, indem er vom Ballast der Sprachkonventionen und dem komplizierten Formalismus befreit wird. Außerdem sollen wieder Personen im Bereich der Ausbildung, Schule, Beruf und auch privat, die keine gelernten Programmierer sind, jedoch ihre Ideen in Computerprogramme umsetzen möchten, wieder an das Programmieren herangeführt werden. Insbesondere soll der Informatikunterricht an Schulen reformiert werden, so dass Schüler an das Programmieren herangeführt werden, wodurch die übliche Anwendung fertiger Programme zurückgedrängt werden kann. Kreative Herausforderungen ermitteln versteckte Talente, fördern die Freude am Unterricht und stärken Logik und Mathematikverständnis.

Das Bestreben der Erfindung ist es, einem Personenkreis eine Programmierumgebung bereitzustellen, die es ihnen ermöglicht, Ideen kreativ in Programme umzusetzen, ohne Spezialisten zu sein.

Diese Aufgabe ist durch die Merkmale des Patentanspruches 1 und 21 gelöst.

Erfindungsgemäß ist vorgesehen, dass Programmanweisungen sich aus Operationen und Objekten zusammensetzen, wobei Objekte adressierbar sind sowie Operationen und Objekte aus Auswahllisten ausgewählt werden.

Die Erfindung zeigt somit eine Lösung, wie Programme entwickelt werden können, ohne einen Befehlssatz zu erlernen und ohne dass der Programmtext eingetippt werden muss. Der Benutzer muss sich nicht mehr um Formalismen (Syntax) kümmern. Syntaxfehler können nicht mehr entstehen.

Die Erfindung ist für Sprachdesigner zur Gestaltung von Programmieroberflächen gedacht, wobei die Programmieroberfläche technische oder nicht-technische reale Verfahren oder Prozesse abbilden. Mit dieser Programmieroberfläche kann zum Beispiel ein verfahrenstechnischer Prozeß gesteuert oder geregelt werden. Denkprozesse sollen auf das Prozessuale fokussiert werden. Diese neue Programmierform kann als "Prozessuales Programmieren" verstanden werden. Programmzeilen sind auf einfache Weise zu erstellen. Ihr Inhalt wird beim nachträglichen Lesen, insbesondere von anderen Personen, die diese Programmzeilen nicht selbst erstellt haben, leicht verstanden. Schliesslich sind sie zwecks einfacher Pflege leicht änderbar.

In vorteilhafter Weise werden die zuvor angeführten Nachteile beseitigt, indem der Programmierende in die Lage versetzt wird, den Programmcode intuitiv zu erstellen und einfach zu lesen und zu pflegen. Der Programmierende denkt nicht mehr formalistisch und es ist für ihn nicht mehr erforderlich, einen Befehlssatz zu erlernen.

Im weiteren Verlauf der Beschreibung werden folgende Begriffe verwendet:
"Sprachdesigner" ist derjenige der auf der Basis der Erfindung eine Programmiersprache entwickelt.
"Softwareentwickler" ist derjenige, der auf der Basis einer Programmiersprache entsprechend der Erfindung eine Anwendung entwickelt.
"Operator" ist derjenige, der eine Anwendung einer erfindungsgemässen Programmiersprache bedient.

Der Grundgedanke der Erfindung gemäß Patentanspruch 1 besteht somit zunächst darin, dass Programmanweisungen aus Operationen und Objekten gebildet werden. Die Denkweise beim Programmieren wird dadurch in eine neue Richtung gelenkt. Bei der Umsetzung der prozessualen Aufgabe muss ein Softwareentwickler nicht mehr daran denken, welchen Befehl er gerade anwenden sollte. Dagegen hat er sich die Frage zu stellen, welche Operation er benötigt und mit welchen Objekten er die Operation durchführen möchte. Jeder Fachmann wird ungläubig staunen, wenn die Komplexität moderner Sprachen bedacht wird, dass dies möglich ist.

Dabei benutzt die Erfindung Schlüsselworte in Verbindung mit Auswahllisten (Kontextmenus), um Operationen und Objekte zur Fertigstellung einer Anweisung auszuwählen. Objekte, welche die Erfindung meint, sind Träger von Dateninhalten und können über einen individuellen Namen (Adresse) angesprochen werden. Objekte sind häufig in Baumstrukturen eingebunden, so dass diese mit einem Pfad gekoppelt sein können. Objekte können sein: graphische Objekte, Variablen, Prozeduren, Dateien, Schaubilder, Datenbanken, Schnittstellen und dergleichen. Die Grundform einer Programmanweisung entsprechend der Erfindung kann lauten:
>Operation: Pfad\Objekt<

Dabei nehmen die beiden Teile Operation und Pfad\Objekt die Funktion von Schlüsselworten ein, die im weiteren Bedienprozeß durch eine spezielle Operation und Objekte ersetzt werden können.

Es ist weiterhin gemäß Patentanspruch 2 erfindungsgemäss vorgesehen, dass Operationen auf Daten der Objekte zugreifen und Operationen Objekte und Programmabläufe beeinflussen. Hierdurch wird dem Softwareentwickler ein prozessualer Grundgedanke vorgegeben, seinen Denkprozess darauf auszurichten, ob er mit seiner geplanten Programmsequenz auf Daten der Objekte, auf Objekte direkt oder steuernd auf Programmabläufe zugreifen möchte. Damit kann er auf einfache Weise eine Operation auswählen, wodurch die gewünschte Aufgabe erfüllt wird.

Ein Beispiel für die Arbeit mit Daten ist, wenn einem graphischen Ausgabeobjekt (Digitalanzeiger) einen Messwert zugewiesen wird. Dadurch wird der Effekt erreicht, dass der Messwert in dem graphischen Objekt auf dem Bildschirm angezeigt wird. In diesem Falle benötigt er eine Operation, die auf Messwerte (Daten) zugreifen kann.

### >Zuweise Daten: Visu\ Schaubild\TestScreen\ DigAnz. Innentemp = LVTemperatur<

Ohne auf Einzelheiten einzugehen lautet die Anweisung im Klartext:
Dem Digitalen Anzeiger
>DigAnz<
mit dem Namen
>Innentemp<
im Schaubild
>TestScreen<
wird der Wert der lokalen Variablen
>LVTemperatur<
zugewiesen. Durch die Zuweisung wird der Wert der Variablen *>LVTemperatur<* automatisch angezeigt.

Eine Anweisung, bei welcher eine Operation direkt auf ein Objekt zugreift kann, lautet:
>Veranlasse Öffne: Visu\ Schaubild. *Bedienen<*
>Veranlasse Öffne< ist die Operation<.
> Visu\ Schaubild. *Bedienen<* ist das Objekt.

Durch diese Operation wird das Objekt >Visu\ Schaubild. *Bedienen<* geöffnet und auf dem Bildschirm sichtbar gemacht. Dabei ist >Visu\ Schaubild< der Pfad und *>Bedienen<* der Name des Schaubildes.

Ein solches Schaubild ist Teil des graphischen Interface. Es enthält graphische Objekte, Visuobjekte genannt.

Eine Anweisung, die den Programmablauf beeinflusst, kann lauten:
>Steuere Aufruf: **Baustein\ Parallel.** *Einfüllen<*

Dabei ist >Steuere Aufruf:< die Operation, > **Baustein\** Parallel. *Einfüllen<* ist das Objekt. Diese Anweisung drückt aus, dass eine Prozedur mit dem Namen *>Einfüllen<* aufgerufen wird, wodurch der weitere Ablauf des Programmes mit diesem Baustein fortgesetzt wird. Dabei ist > **Baustein\** Parallel< der Pfad des Objekts und <Parallel< der Typ des Objektes mit dem individuellen Namen *>Einfüllen<.* In vorteilhafter Weise helfen Auswahllisten, auch Kontextmenus genannt, bei der Strukturierung und der Progrmmierung. Wenn eine Operation ausgewählt wurde, so werden im dann dazugehörigen bereitgestellten Auswahlmenu der Objekte nur diejenigen angezeigt, die an dieser Stelle einen Sinn ergeben.

Es ist gemäß Patentanspruch 3 weiterhin erfindungsgemäss vorgesehen, dass Objekte Kategorien zugeordnet sind. Diese Kategorien sind Hauptobjekte, Objekte und Subobjekte.

Hauptobjekte enthalten Objekte, wobei sie die Funktion von Containeren für Objekte annehmen können, wie zum Beispiel Schaubilder, die graphische Objekte enthalten, Formulare mit Formularfeldern, um Protokolle auszugeben. Hauptobjekte können Dateien und Datenbanken sein. Es können auch Schnittstellen oder Fremdgeräte (Umwelt) sein.

Objekte enthalten keine weiteren Objekte. Es können den Objekten jedoch Subobjekte zugeordnet sein. Objekte sind Träger von Dateninhalten. Objekte können z. B. graphische Objekte, Variable, Konstante sowie Programmbausteine (Prozeduren), wobei diese Programmanweisungen enthalten, sein.

Subobjekte sind dadurch gekennzeichnet, dass sie Bezug zu einem Objekt oder zu einer Operation haben, wobei sie die korrespondierende Operation oder das Objekt ergänzen.

Welche Hauptobjekte, Objekte und Subobjekte einem Softwareentwickler zur Verfügung stehen, hängt einerseits von der Mächtigkeit der Sprache ab, die dem Softwareentwickler zur Verfügung steht, andererseits davon, welche Objekte er installiert hat. Im speziellen Fall einer vorgewählten Operation stehen im Kontextmenu nur noch diejenigen Objekte zur Verfügung, die an dieser Stelle einen Sinn ergeben. Bei den graphischen Objekten steht ihm eine Palette von Objekten (Typen) zur Verfügung, aus denen er welche auswählen und auf der Oberfläche eines Visuschaubilds installieren und mit einem individuellen Namen versehen kann. Der Umgang mit Objekten allgemein stellt für den Softwareentwickler keine Hürde dar, da er durch die operationsbezogenen Kontextmenus die an der jeweiligen Stelle verfügbarer Objekte mit Hilfe von Kontextmenus voreingestellt zur Auswahl zur Verfügung gestellt bekommt.

Eine Operation, die mit einem Hauptobjekt und einem Subobjekt arbeitet kann sein:
>Veranlasse Öffne: **Visu**\ Schaubild\TestScreen (Vollbild\ ***Ja***)

Diese Anweisung sagt aus, dass das Schaubild mit dem Namen
*>TestScreen<* (Hauptobjekt)
als Vollbild geöffnet wird.
>Visu\< ist die Kategorie (Visualisierungsschaubilder),
>Schaubild< ist Typenbezeichnung,
*>TestScreen<* ist individueller Name (Namen sind kursiv),
>(Vollbild\ Ja)< ist ein Subobjekt, wobei >Vollbild< die Kategorie ist und >Ja< eine Konstante mit dem Dateninhalt logisch 1.

Hier hätte der Programmierende aus dem Kontextmenu auch als eine andere Konstante >**Nein**< auswählen können, mit dem Dateninhalt logisch 0, wodurch das Schaubild nicht im Vollbildmodus geöffnet worden wäre. Wie leicht zu erkennen ist, ist das >Schaubild< ein Hauptobjekt, da es weitere (graphische) Objekte enthält. Das Subobjekt ist dem Hauptobjekt als Ergänzung zugeordnet.

Hier ein Beispiel eines Objektes:
>Visu\ Schaubild\ *TestScreen\* AnAnz. *lnnentemp<*

Das Objekt hat den Namen *>lnnentemp<* und gehört zum Typ der Analoganzeigen >AnAnz< und ist in dem Schaubild mit dem Namen *>TestScreen<* angeordnet.

Dabei ist:
>Visu\< die Kategorie (Visualisierung),
>Schaubild< die Typbezeichnung der Schaubilder,
>TestScreenl< der individuelle Name (Namen sind kursiv),
>AnAnz.< Typbezeichnung Analoganzeige,
*>Innentemp<* individueller Name des Objektes (Namen sind kursiv).

Die Kategorie >Visu< ist Fett ausgegeben. Dies hat eine besondere Bewandtnis, auf die später noch eingegangen wird.

Für den Sprachdesigner sind Subobjekte ein bedeutendes Instrument, da er mit deren Hilfe starke Anweisungen entwickeln kann. Subobjekte können einen Bezug zu einem Hauptobjekt, einem Objekt haben oder einen Bezug zur Ausführung einer Operation haben.

Das folgende Beispiel zeigt eine Anweisung, bei der das Subobjekt einen Bezug zur Ausführung der Operation hat:
>Veranlasse öffne: ***Report**\Endtest (**LV**Result)<.*

Der Report ist ein Hauptobjekt mit dem Namen > *Endtest<* und wird geöffnet und ist somit auf dem Bildschirm sichtbar. Das Subobjekt mit der vorgegebenen Variablen > ***LV**Result<* enthält einen Wert, der aussagt, ob die Operation erfolgreich oder nicht erfolgreich verlaufen ist. Somit ist *>LVResult<* ein Subobjekt, welches der Operation zugeordnet ist.

Das folgende Beispiel zeigt eine Anweisung, bei der ein Subobjekt einem Objekt zugeordnet ist:

Die Aufgabe ist es, einen Messwert von einem intelligenten peripheren Messwerterfassungsgerät (mit dem Parameter eines technischen Prozesses erfasst werden) zu holen. Es kann gleichzeitig ermittelt werden, ob dieser Messwert gültig ist. Es könnte ja sein, dass eine Störung vorliegt, die das periphere Gerät erkennt und als Binärwert zur Verfügung stellt. Eine solche Anweisung kann wie folgt lauten:
>Zuweise: Daten: Objekt **= Kanal\**AnEin**.** *Temperatur* (Out: Gültig\ ***LV**Test)<*

Dies Anweisung ist noch nicht fertiggestellt. Das Schlüsselwort >Objekt< muss noch durch fertigen Programmtext ersetzt werden. Die Funktion ist folgende: Dem Objekt links vom Gleichheitszeichen wird der Wert des Kanalobjektes >**Kanal**\AnEin. *Temperatur*< zugewiesen. In Klammern eingefasst steht das Subobjekt >(Gültig\ ***LV**Test)<,* in dem ein Binärwert vom System zurückgeliefert wird, der zum Inhalt hat, ob der Messwert des Hauptobjektes gültig/ungültig ist. Die weitere Aufgabe des Softwareentwicklers bei dieser Anweisung ist es, das Schlüsselwort >Objekt< zu ersetzen. Die fertige Anweisung kann lauten: >Zuweise Daten: *LVMesswert=* Kanal\AnEin*. Temperatur* (Gültig*\**LV**Test*)*<*

Ein Beispiel für Subobjekte die mit einem Hauptobjekt in Bezug stehen sind Tabellen.

### Zuweise Wert: AVZelle = Visu\Ausgabe\Tab.Ausgabe (In:Spalte\3, Zeile\5)

Die Zelle in der Spalte 3 und Zeile 5 der Tabelle mit Namen Ausgabe wird der Variablen *>**AV**Zelle<* zugewiesen. Subobjekte > Spalte\***3*<** und Zeile\5< stehen in Bezug zum Tabellenobjekt >**Visu**\*Ausgabe*\Tab.*Ausgabe*<.

Ein Beispiel, bei der ein Subobjekt Teil einer Operation ist:
>Frage: Wenn **Visu**\ *TestScreen\* AnAnz. *Innentemp =<> 30<*

Ende Frage<. Die gewünschte Funktion ist folgende: Es wird getestet, ob die Analoganzeige (AnAnz) mit Namen *>Innentemp<,* die im Visualsierungs-Bildschirm mit dem Namen *>TestScreen<* angeordnet ist, gleich/kleiner/grösser als 30 (°C) ist. Dabei ist das Schlüsselwort ein Subobjekt ( =<> ). Es ermöglicht, einen Operanden oder eine Kombination auszuwählen. Die Anweisung kann lauten:
>Frage: Wenn **Visu**\ *TestScreenl* AnAnz. *lnnentemp =>* **30**<
Ende Frage<.

Der Operator (=>) ist ein Subobjekt und steht in Bezug zur Operation. "Visu" ist die Kategorie der Visuobjekte der graphischen Benutzeroberfläche. *>TestScreen<* ist der individuelle Name des Screens. >AnAnz< ist die Typbezeichnung des Visuobjekttyps Analoganzeige. *>lnnentemp<* ist der individuelle Name des Objektes "Analoganzeige" **30** ist ein Festwertobjekt mit dem Dateninhalt **30**. Wenn der Vergleich wahr ist, so werden die Anweisungen, die zwischen den beiden Zeilen der Blockanweisung eingefügt werden können, ausgeführt. Wenn der Vergleich unwahr ist, so werden die Anweisungen nicht ausgeführt. Der Begriff der erfindungsgemässen Subobjekte muss in einem breiten Zusammenhang gesehen werden. Subobjekte, die einen Bezug zur Operation haben, können mit den folgenden Dateninhalten vorgesehen sein: Rechenzeichen, (+, -, *, /), logische Operationen (und, oder, exklusiv oder, gleich grösser, ungleich....), Funktionen (Logarithmus, Potenz, Wurzel, Trigonometrisch). Es können Objekte vorgesehen sein, die im Sprachumfang vorinstalliert sind. Zum Beispiel dann, wenn einer Variablen ein Datentyp zugewiesen werden soll. >Zuweise Datentyp: ***AV**Stellwert = **Ganzzahl<**.* Dabei ist *>**Ganzzahl**<* (Integer) ein Objekt, welches vorinstalliert ist und automatisch in das Kontextmenu aufgenommen wird. In dieser Auswahlliste können folgende Alternativen vorgesehen sein: *>**Ganzzahl**< >**Binär**<, >**Gleitkomma**< >**Text**<.* In diesem Zusammenhang ist die Funktion der Dateninhalt und gleichzeitig der Name der Objekte. Eine weitere Möglichkeit ist ein Festwertobjekt. >ZuweiseWert: ***AV**Stellwert = **30**< >**30**<* ist ein Festwert, der im Entwicklungsmodus festgelegt wird. Dieser Festwert ist ein Objekt mit dem Namen >**30**< und dem Dateninhalt 30. >ZuweiseWert: ***AV**Stellwert = **Ein**< >**Ein**<* kann eine Konstante sein, mit dem Dateninhalt logisch 1. Alternativ >**Aus**< mit dem Dateninhalt logisch 0.

Es ist gemäß Patentanspruch 4 erfindungsgemäss vorgesehen, dass beim Vorgang des Erzeugens einer neuen Anweisung eine Operation aus einer Auswahlliste ausgewählt werden kann. Dadurch wird ein Anweisungsrohling angezeigt. Dieser enthält den Begriff der gewählten Operation sowie Schlüsselworte, mit denen Auswahllisten aufgerufen werden können, wodurch, vom Typ der Anweisung abhängig, Hauptobjekte, Objekte und Subobjekte ausgewählt werden können. Ein solcher Anweisungsrohling, der mit dem Anlegen und Auswahl einer Operation erzeugt wurde, kann folgendes Aussehen haben:
>Veranlasse Öffne: Objekt <.

Die Operation ist >Veranlasse Öffne<.

Das (unterstrichene) Schlüsselworte Objekt muss nun mittels einer Auswahlliste, die durch Klick auf Objekt aufrufbar ist, durch ein gewünschtes Objekt ersetzt werden. Die Auswahlliste wird diejenigen Objekte enthalten, die genau an dieser Stelle möglich sind. Solche Objekte können z. B. Dateien oder Schaubilder des graphischen Interface sein. Ein weiteres Beispiel für einen Anweisungsrohling kann sein: >Zuweise Daten: Objekt = Objekt <. Darin ist >Zuweise Daten:< die Operation. Ein weiteres Beispiel für einen Anweisungsrohling kann sein: >Frage: Wenn Objekt =<> Objekt dann < >Ende Frage<. Darin ist >Frage: Wenn ... =<> ... dann < die Operation. Die beiden Schlüsselworte > Objekt< sind Objekte. Das Schlüsselwort (=<>) ist der Operand. Es ist eine Subobjekt, welches der Operation zugehörig ist.

Es ist gemäß Patentanspruch 5 erfindungsgemäss vorgesehen, dass Gruppen von Operationen zur Auswahl von Operationen verfügbar sind, die Anfragen ermöglichen (Frage), Daten Objekten zuweisen können (Zuweise), mit Hauptobjekten arbeiten (Veranlasse), Programmabläufe steuern (Steuere), das Aussehen von Objekten verändern können (Konfiguriere). Das Kontextmenu beim Einfügen einer neuen Programmzeile kann die folgenden Operationsgruppen verwenden.

| | |
|---|---|
| Frage | Zugriff auf Daten der Objekte |
| Zuweise | Zugriff auf Daten der Objekte |
| Veranlasse | Zugriff auf Hauptobjekte und Daten der Hauptobjekte |
| Steuere | Zugriff auf Objekte |
| Konfiguriere | Zugriff auf die Eigenschaften der Objekte. |

Mindestens sollten die Operationsgruppen Frage, Zuweise, Veranlasse, Steuere verfügbar sein. Die Gruppe Konfiguriere würde die Sprachversion leistungsfähiger machen. Durch diese Anordnung nur weniger Operationsgruppen wird es dem Softwareentwickler leicht gemacht, eine Entscheidung zu fällen. Die Gruppe "Frage" wird der Programmierende einsetzen, wenn er eine Anfrage an das System richtet bzw. eine Information einholen möchte, zum Beispiel, ob eine Taste gedrückt wurde. Operationen dieser Gruppe weisen Daten der Objekte zu. Die Gruppe "Zuweise" wird der Programmierende einsetzen, wenn er Daten einem Objekt zuweisen möchte, zum Beispiel ein Messwert, einem Anzeigegerät auf einem Schaubild zuweisen, wodurch der Messwert angezeigt wird. Die Gruppe "Veranlasse" ermöglicht es, dass auf Hauptobjekte direkt oder auf Daten der Hauptobjekte zugegriffen werden kann. Der Softwareentwickler wird diese Operationen einsetzen, wenn er den Zustand eines Hauptobjektes verändern möchte (zum Beispiel Öffnen/Schliessen, Starten/stoppen, Anlegen/Löschen) und wenn er Datensätze von einem Hauptobjekt auf ein anderes übertragen möchte. Die Gruppe "Steuere" ermöglicht es, den Programmablauf zu beeinflussen. Zum Beispiel durch Aufruf eines Programmbausteins, wodurch der das Programm mit diesem Baustein fortgesetzt wird, oder durch einen Wartezyklus im Programmablauf oder durch eine Wiederholeanweisung. Die Gruppe "Konfigurieren" wird der Programmierende einsetzen, wenn er Eigenschaften eines graphischen Objektes wie zum Beispiel sein Aussehen ändern möchte.

Zusammengefasst sind folgende einfache Gedankengänge notwendig, um eine neue Anweisung auszuwählen:

| | |
|---|---|
| Information einholen | → Operation Frage |
| Daten einem Objekt zuweisen | → Operation Zuweise |
| Zugriff auf Hauptobjekte | → Operation Veranlasse |
| Programmablauf steuern | → Operation Steuere |
| Aussehen eines Objektes | → Operation Konfiguriere |

Es ist gemäß Patentanspruch 6 erfindungsgemäss vorgesehen, dass es die Aufgabe der Operationsgruppe "Frage" ist, Daten von Objekten zu vergleichen, wodurch eine Bedingung abgeleitet wird, in der Weise, dass korrespondierende Anweisungen ausgeführt werden, wenn die Bedingung wahr ist und nicht ausgeführt werden, wenn die Bedingung nicht wahr ist. Wenn eine Operation dieser Gruppe ausgewählt wird, so kann die Rohanweisung lauten:
>Frage Wenn Objekt <>= Objekt dann<
>Ende Frage <.

Die Aufgabe der Frage-Operationen ist es zu testen, ob ein Wert grösser, kleiner, gleich einem anderen Wert ist.
>Frage Wenn **Visu**\ Schaubild\*TestScreen*\ AnAnz. *lnnentemp* => ***30***<
>Ende Frage<
>Visu< ist die Kategorie der Visuobjekte des graphischen Benutzerinterface (GUI).
>Schaubild< ist die Typbezeichnung eines Screens des graphischen Benutzerinterface. *>TestScreen<* ist der individuelle Name des Screens. > AnAnz< ist die Typbezeichnung des Visuobjekttyps "Analoganzeige". *>Innentemp<* ist der individuelle Name des Objektes "Analoganzeige. *>**30**<* ist ein Festwertobjekt mit dem Dateninhalt 30 Die fertige Anweisung lautet im Klartext: Es wird getestet, ob die Analoganzeige (AnAnz) mit Namen *>lnnentemp<,* die im Schaubild mit dem Namen >TestScreen< angeordnet ist, grösser 30 (°C) ist. Wenn der Vergleich wahr ist, so werden die Anweisungen, die zwischen den beiden Zeilen der Blockanweisung eingefügt werden können, ausgeführt. Wenn der Vergleich unwahr ist, so werden die Anweisungen nicht ausgeführt.

Es ist gemäß Patentanspruch 7 erfindungsgemäss vorgesehen, dass es die Aufgabe der Operationsgruppe Zuweise ist, den Datenaustausch zwischen Objekten zu ermöglichen, deren weitere Aufgaben es sein können, Daten ein Format oder einem Datentyp zuzuweisen. Ein Anweisungsrohling der Zuweise-Anweisung kann lauten:
>Zuweise Wert: Objekt = Objekt<. Wenn ein Softwareentwickler einen Wert anzeigen will, so kann er die folgende Anweisung generieren:
>Zuweise Wert: **Visu**\ Schaubild\TestScreen\ AnAnz. *lnnentemp.* = ***AV**Temperatur<.*

In Klarschrift: Der Wert der Variablen *"Temperatur"* wird dem Visualisierungsobjekt *"InnenTemp."* des Typs Analoganzeige (AnAnz), welches auf dem Visu-Bildschirm "TestScreen" angeordnet ist, zugewiesen. ***AV**Temperatur* ist eine Variable mit dem Namen *Temperatur.* **AV** → Anwendungsvariable.

Wenn ein Softwareentwickler einen Sollwert einem Analogausgang zuweisen möchte, so kann er die folgende Anweisung generieren:
>Zuweise Wert: **Kanal**\ *AnAus\Kühlung* = **Visu**\ Schaubild. *Bedienen*\Drehknopf. *Sollwert<.*

Dadurch wird ein eingestellter Sollwert zum Beispiel als 0 bis 20 mA Wert ausgegeben, wodurch der Wert einem Regler als Sollwert vorgegeben werden kann. Wenn ein Softwareentwickler Berechnungen durchführen möchte, so kann er die Zuweise Wert Operation verwenden. Eine solche Anweisung kann lauten:
>ZuweiseWert: **AV**Speed = **LV**Drehzahl * **LV**Raddurchmesser<.
>ZuweiseWert< ist die Operation, >**AV**Speed<, *>**LV**Drehzahl<,*
*>**LV**Raddurchmesser<* sind Variablenobjekte. Diese Anweisung ermöglicht es, dass der Variablen > ***AV**Speed<* das Produkt aus den beiden Variablen *>**LV**Drehzahl< und >**LV**Raddurchmesser<* zugewiesen wird.

Eine weitere Aufgabe der Gruppe Zuweise kann sein, dass Variablen ein Datentyp zugewiesen wird. Eine solche Anweisung kann sein:
>Zuweise Datentyp: ***AV**Stellwert* = ***Ganzzahl**<.*

Dabei ist *>**Ganzzah**l<* (Integer) ein Objekt, welches vorinstalliert ist und automatisch in das Kontextmenu aufgenommen wird. In dieser Auswahlliste können folgende Alternativen vorgesehen sein: ***>Ganzzahl<** >**Binär<, >Gleitkomma< >Text**<.* In diesem Zusammenhang ist die Funktion der Dateninhalt und gleichzeitig der Name der Objekte.

Eine weitere Aufgabe der Gruppe Zuweise kann sein, dass Variablen ein Zahlenformat zugewiesen werden kann. Eine solche Anweisung kann lauten:
>Zuweise Format: ***AVStellwert** =* **Format\###0,0** <.

Die Anweisung ermöglicht es, der Variablen > ***AV**Stellwert<* ein Zahlenformat zuzuweisen. Die gewählte Formatierung besagt, dass vier Stellen vor dem Komma vorgesehen sind, sowie eine Nachkommastelle. Immer werden eine Stelle vor und eine Stelle nach dem Komma angezeigt.

Es ist gemäß Patentanspruch 8 weiterhin erfindungsgemäss vorgesehen, dass es Aufgabe der Operationsgruppe Veranlasse sein kann, dass Hauptobjekte geöffnet und geschlossen werden können, dass Hauptobjekte angelegt und gelöscht werden können, dass Hauptobjekte gestartet und gestoppt werden können, dass geprüft werden kann, ob Hauptobjekte vorhanden sind, dass Hauptobjekte kopiert und eingefügt werden können, dass Hauptobjekte untereinander Dateninhalte austauschen können. Für ein spezielles Sprachprodukt müssen nicht alle der aufgezählten Operationsgruppen eingesetzt werden. Welche Operationen für ein spezielles Sprachprodukt verwendet werden, hängt von seinem Verwendungszweck ab.

Ein Hauptobjekt, das geöffnet und geschlossen werden kann, ist zum Beispiel ein Parameterschaubild. Ein Parameterschaubild ermöglicht es dem Operator, Parameter für weitere Versuche einzugeben. Somit können Reihenversuche mit immer anderen Parametern durchgeführt werden. Das Parameterschaubild enthält Eingabeobjekte. Ein Softwareentwickler kann das Parameterschaubild mit den für seine Anwendung geeigneten Objekten versehen. Das Parameterschaubild korrespondiert mit Parameterdateien, die wiederum Hauptobjekte sind, in denen die Parameterdatensätze gespeichert werden.

Eine weitere Anwendung eines Parameterschaubildes in der Verfahrenstechnik kann sein, dass Rezepte eingegeben werden, wodurch der folgende Prozess mit diesem Rezept durchgeführt werden kann. Solche Rezepte können Dosierungen bei Mischprozessen sein. Die Rohanweisung um ein Parameterschaubild zu öffnen kann lauten:
>Veranlasse Öffne: Objekt<.

Das Schlüsselwort Objekt wird mittels Kontextmenu durch das Hauptobjekt
**>Parameterschaubild<** ersetzt. Die fertige Anweisung lautet dann:
>Veranlasse öffne: **Parameterschaubild<.**

Dadurch ist das Parameterschaubild auf dem Bildschirm sichtbar. Der Operator kann nun Parameter eingeben. Diese kann er als Konserve abspeichern oder direkt einen (Misch)Prozess starten, der mit den eingegebenen Parametern durchgeführt wird. Weiterhin könnte er einen bekannten Dartensatz laden, für seine aktuelle Aufgabe anpassen und unter einem neuen Namen als Konserve wieder abspeichern. Ein Beispiel eines Hauptobjektes, das Daten mit einem anderen Hauptobjekt austauschen kann, ist ein Parameterschaubild und dazu korrespondierende Dateien, wobei die eingegebenen Parameterdaten in den Dateien konserviert werden. Eine Rohanweisung, um Parametersätze abzuspeichern, kann wie folgt lauten:
>Veranlasse Parameter Speichern: **ParDatei** *(**LV**Result)<*

Für **>ParDatei<** kann der Operator bei Ausführung der Anweisung im Laufzeitmodus eine Parameterdatei auswählen oder eine neue Parameterdatei anlegen. Nach der Eingabe durch den Operator wird das Programm fortgesetzt. In der Variablen *>LVResult<* ist ein Wert abgespeichert, der aussagt, ob die Anweisung korrekt ausgeführt wurde. In diesem Beispiel ist **>ParDatei<** das Hauptobjekt. Es ist die Summe aller Parameterdateien, die mit dem Parameterschaubild korrespondieren. Die einzelne Parameterdatei enthält jeweils einen Datensatz, der im Parameterschaubild durch einen Operator eingegeben wurde. Der Dateninhalt des Hauptobjektes **>ParDatei<** sind Parameterdateien, die mit diesem Parameterschaubild korrespondieren. Dementsprechend ist für das Hauptobjekt Parameterdatei **>ParDatei<** keine Auswahlliste erforderlich, da nur ein Hauptobjekt verfügbar ist, welches vom Sprachdesign vorgegeben wurde.

Es ist gemäß Patentanspruch 9 weiterhin erfindungsgemäss vorgesehen, dass es Aufgabe der Operationsgruppe Steuere ist, dass Programmbausteine aufgerufen werden können, dass im Programmablauf Wartezyklen vorgesehen werden können, dass Wiederhole Anweisungen (Schleifen) vorgesehen sein können.

Mit der folgenden Anweisung kann ein Programmbaustein (Prozedur) aufgerufen werden, wodurch das Programm mit dem aufgerufenen Baustein fortgesetzt wird.
>Steuere Aufruf: **Baustein\** Ablauf\ *lnit <.*

Diese Anweisung sagt aus, dass ein **>Baustein<** vom Typ >Ablauf< mit dem Namen *>Init<* aufgerufen wird. Das Kontextmenu für die Objekte der Operation >Steuere Aufruf:< enthält nur diejenigen Bausteinobjekte, die an dieser Stelle möglich sind. Mit der folgenden Anweisung kann ein unbedingter Wartezyklus in den Programmablauf eingefügt werden:
>Steuere Warte: Var millisec.<.
>Steuere Warte< ist die Operation. Var ist ein Schlüsselwort, das in seiner Auswahlliste über Variable, Konstante, Formel und Festwerte verfügt. Wenn ein Festwert ausgewählt werden soll, so öffnet sich ein Eingabedialog, der die Eingabe eines Zahlenwertes ermöglicht. (zum Beispiel 1000)

Wenn das Schlüsselwort Var ersetzt wird, so lautet die fertige Anweisung:
>Steuere Warte: 1000 millisec. <.

Eine bedingte Warteanweisung kann lauten:
>Steuere Warte: Wenn Objekt = Objekt <.

Der Programmablauf wird nur angehalten, wenn die Inhalte der beiden Objekte gleich sind. Zum Beispiel kann das Objekt links vom Gleichheitszeichen ein Schalterobjekt sein und rechts eine Konstante **>Aus<** mit dem Dateninhalt logisch 0, wodurch das Programm nur solange angehalten wird, wie der Schalter nicht eingeschaltet ist.

Es ist gemäß Patentanspruch 10 weiterhin erfindungsgemäss vorgesehen, dass Operationen der Operationsgruppe Konfiguriere es ermöglichen, dass Eigenschaften graphischer Objekte wie Grösse, Farbe, sichtbar/unsichtbar verändert werden können. Wenn graphische Objekte vom Benutzer ausgewählt werden, so können sie auf dem Bildschirm positioniert und mit Hilfe von Konfigurationsdialogen konfiguriert werden (z. B. Grösse, Lage, Farben etc). Diese Einstellungen können je nach Sprachumfang per Programm geändert werden.

Ein Sprachdesigner kann den Programmierern diese Möglichkeiten einräumen, indem er eine Operationsgruppe "Konfiguriere" bereit stellt. Damit können Eigenschaften von graphischen Objekten per Programm geändert werden. Solche Eigenschaften können Grösse, Farbe, sichtbar/unsichtbar etc. sein.

Das Beispiel einer Rohanweisung kann lauten:
>Konfiguriere: Objekt (Eigenschaft) = Var<.

Die fertige Anweisung kann lauten: Konfig Schreiben:
Visu\Ausgabe\ Taster. *Weiter* (Sichtbar) = ***Ein**.*

Diese Anweisung sagt aus, dass das Visuobjekt mit Namen *>Weiter<* des Objektyps >Taster< positioniert im Visualisierungsbildschirm *>Ausgabe<* sichtbar gemacht wird. Sollte es vorher unsichtbar gewesen sein, so wird das Objekt nach dieser Anweisung sichtbar. *>**Ein**<* ist eine Konstante mit dem Dateninhalt logisch 1. Eine solche Eigenschaft kann ein Softwareentwickler nutzen, wenn er einen Taster nur dann sichtbar machen möchte, wenn eine Bedienung aus der Sicht des zu steuernden Prozess einen Sinn ergibt. Ein Sprachdesigner muss eine klare Abgrenzung zur Zuweiseoperation vornehmen. Wenn zum Beispiel eine Signalleuchte eingeschaltet wird so erkennt dies der Operator an dem Farbumschlag (zum Beispiel rot/grün). Dieser Farbumschlag gehört zur Zuweiseoperation, da er dem Dateninhalt Ein/Aus zugeordnet ist. Jedoch gehört die Wahl der Farben für den Ein- und Auszustand zu den Eigenschaften.

Erfindungsgemäss sind gemäß Patentanspruch 11 Auswahllisten für Hauptobjekte und Objekte vorgesehen, deren Listenelemente, die ausgewählt werden können, einen Bezug zur ausgewählten Operation haben und weiterhin die Objekte enthalten, die zuvor vom Softwareentwickler installiert worden sind.

Ein solches Beispiel sind graphische Objekte eines Visualisierungsbildschirms. Ein Softwareentwickler legt zuerst als Hauptobjekt ein Visualisierungsschaubild zum Beispiel >**Visu**\ Schaubild\ *TestScreen\* an. Diesen gibt er den individuellen Namen *>TestScreen<.* Auf diesem Bildschirm installiert er ein graphisches Objekt vom Typ Digitalanzeige >DigAnz< und vergibt ihm den individuellen Namen *>Temp<.* Dadurch wird dieses Objekt automatisch in die Auswahllisten der Operationen aufgenommen, die einen Bezug zu diesem Objekt haben. Dies kann sein:
>Zuweise Wert: Visu\ Schaubild\TestScreen\ DigAnz. *Temp =* Var<.

Das Schlüsselwort Var muss noch durch ein Objekt ersetzt werden.

Es ist gemäß Patentanspruch 12 erfindungsgemäss vorgesehen, dass Auswahllisten für Hauptobjekte und Objekte vorgesehen sind, deren Listenelemente, die ausgewählt werden können, einen Bezug zur ausgewählten Operation haben und die vom Sprachdesign vorgegeben sind. Ein solche Anweisung kann sein:
>Zuweise Datentyp: ***AV**Stellwert = **Ganzzahl**<.*

Der Variablen *>**AV**Stellwert<* wird der Datentyp "Ganzzahl" zugewiesen, sodass diese Variable, solange dieser Datentyp gilt, keine Kommastellen aufweist. Dabei ist *>**Ganzzahl**<* (Integer) ein Objekt, welches vorinstalliert und durch das Sprachdesign begründet ist, automatisch in der Auswahlliste verfügbar ist. In der Auswahlliste können weitere Alternativen erscheinen wie ***>Ganzzahl<, >Binär<, >Gleitkomma<,** >**Text**<.* In diesem Zusammenhang ist die Funktion der Dateninhalt und gleichzeitig der Name. Diese Objekte haben einen Bezug zur Operation >Zuweise Datentyp< und ergänzen diese.

Es ist gemäß Patentanspruch 13 erfindungsgemäss vorgesehen, dass anstelle einer Auswahlliste, wenn das Objekt eine Datei ist, ein Verzeichnis im Laufzeitmodus angezeigt wird, aus dem der Nutzer eine Datei auswählen kann. Ein solches Beispiel ist die folgende Anweisung:
>Veranlasse Speichern: **ParDatei** *(**LV**Result)<.*

Für **>ParDatei<** (Parameterdatei) kann der Operator bei Ausführung der Anweisung im Laufzeitmodus eine Parameterdatei auswählen oder eine neue Parameterdatei anlegen. Nach der Eingabe durch den Operator wird das Programm fortgesetzt. In der Variablen *>LVResult<* ist ein Wert abgespeichert, der aussagt, ob die Anweisung korrekt ausgeführt wurde. Somit kann der Programmierende in der folgenden Anweisung überprüfen, ob das Programm ordnungsgemäss fortgesetzt werden kann. In diesem Beispiel ist **>ParDatei<** das Hauptobjekt. Es ist die Summe aller Parameterdateien, die mit dem Parameterschaubild korrespondieren. Die einzelne Parameterdatei enthält jeweils einen Datensatz, der im Parameterschaubild durch einen Operator eingegeben wurde. Der Dateninhalt des Hauptobjektes **>ParDatei<** sind Parameterdateien, die mit diesem Parameterschaubild korrespondieren. Dementsprechend ist für das Hauptobjekt Parameterdatei **>ParDatei<** keine Auswahlliste erforderlich, da nur ein Hauptobjekt verfügbar ist, welches vom Sprachdesign vorgegeben wurde.

Es ist gemäß Patentanspruch **14** erfindungsgemäss vorgesehen, dass Blockanweisungen vorgesehen sein können mit einer Anfangs- und Endzeile, wobei die Blockanweisung eine Operation und Objekte enthält, die einen Bezug zu Objekten hat, die in den Anweisungen enthalten sind, die in die Blockanweisung eingefügt werden können. Das folgende Beispiel zeigt eine Frage Anweisung, welche eine Blockanweisung ist:
Frage Wenn **Visu**\ *TestScreen\KippS. Ein*/*Aus.* Status = **Ein** dann
Ende Frage.

Frageanweisungen sind mit anderen Anweisungen in der Weise gekoppelt, dass bei Erfüllung der Bedingung die Anweisungen ausgeführt werden, die zwischen den beiden Zeilen der Frageanweisung eingefügt werden können und die bei Nichterfüllung der Testebedingung nicht ausgeführt werden.

Erfindungsgemäss können gemäß Patentanspruch 15 unvollständige Anweisungen vorgesehen sein, die eine Operation, aber keine Objekte enthalten. Solche unvollständigen Anweisungen sind nicht selbstständig. Sie haben einen Bezug zu vollständigen Anweisungen, die eine Operation und mindestens ein Objekt enthalten. Zum Beispiel:
Frage Wenn **Visu**\ *TestScreen\KippS. Ein*/*Aus.* Status = Ein dann
   Zuweise Wert: **LV**A = **3**
Wenn nein dann
   Zuweise Wert: **LV**A =**10**
Ende Frage.
>Wenn nein dann< ist eine unvollständige Anweisung, die sich auf die Anweisung
>Frage Wenn **Visu**.....< Anweisung bezieht. Es handelt sich um eine Alternativoperation.

Es ist gemäß Patentanspruch 16 erfindungsgemäss vorgesehen, dass das Schlüsselwort Var dem Benutzer vorgibt, dass an dieser Stelle als Objekte nur Variablen, Formeln, Konstante oder Festwerte ersetzbar sind. Es liegt im Ermessen des Sprachdesigners an bestimmten Stellen, die mögliche Anzahl der Objekte zu begrenzen. Dies kann durch ein spezielles Schlüsselwort geschehen, welches dem Softwareentwickler sagt, dass ihm hier nur eine begrenzte Zahl von Objekten zur Verfügung steht. Zum Beispiel kann neben Objekt auch ein Schlüsselwort Var vorgesehen sein. Es kann verwendet werden, wenn an der Stelle nur Variable, Formeln, Konstante oder Festwerte das Schlüsselwort ersetzen können.

Zum Beispiel:
Steuere Warte Var mal

Diese Anweisung veranlasst, dass der Programmablauf an dieser Stelle solange angehalten wird, wie es dem Wert in der Variablen (in millisec.) entspricht. Ein weiteres Beispiel ist der Rohling einer Schleifenanweisung:
>Steuere Wiederhole: Für Var = von Var bis Var Schritt Var <
>Ende Wiederhole <.

Die fertige Schleifenanweisung kann lauten:
Steuere Wiederhole: Für **LV**Lauf = von **1** bis **10** Schritt 1 <
>Ende Wiederhole<.
*>***LV***Lauf<* ist die Laufvariable (**LV** steht für lokale Variable). Die anderen Werte sind Festwerte, die das Schlüsselwort Var ebenfalls ersetzen können. Die Laufvariable
*>***LV***JLauf* < ist das Objekt. Die anderen Var's sind Subobjekte und beziehen sich auf die Operation.

Es ist gemäß Patentanspruch 17 erfindungsgemäss vorgesehen, dass dem individuellen Namen eines Objektes, wenn dieses Objekt in einer hierarchischen Struktur eingebunden ist, ein Pfad zugeordnet wird, welcher zusammen mit dem individuellen Namen durch das Ersetzen des Schlüsselwortes in die Anweisung eingefügt wird. Wenn dies so gemacht wird, dann kann die Pflege und Lesbarkeit des Programmes sehr erleichtert werden. Vor allem, wenn in einer Anwendung viele Schaubilder mit vielen Objekten vorkommen. Ohne einen Pfad, wie erfindungsgemäss vorgesehen, der die Herkunft des Objektes nachweist, ist es sehr aufwändig, das Programm zu pflegen. Zum Beispiel:
>ZuweiseWert: **Kanal**\ AnAus. *Setpoint* = **Visu**\ *Testcreen\Sreg.Sollwerteinsteller<.* Der Pfad für das Objekt links vom Gleichheitszeichen ist
>**Kanal**\ AnAus. *Setpoint<.*

Die Kategorie ist **>Kanal<,** der Typ des Kanals ist > AnAus< und *>Setpoint<* ist der individuelle Name.

Der Pfad für das Objekt rechts vom Gleichheitszeichen ist
>**Visu**\ *Testcreen\* Sreg. *Sollwerteinsteller<*

Die Kategorie ist >Visu<, Das Schaubild hat den individuellen Nanenb >Testscreen< der Typ des graphischen Objektes ist >Sreg< (Schieberegler) und *>Sollwerteinsteller<* ist der individuelle Name.

Es ist gemäß Patentanspruch 18 erfindungsgemäss vorgesehen, dass nach dem Ersetzen eines Schlüsselwortes durch einen Anweisungsabschnitt, in diesem Abschnitt eine markierte Stelle (z. B. fett gedruckt) vorgesehen ist, mit der die Auswahlliste wieder aufgerufen werden kann, mit welcher der Anweisungsabschnitt erstellt worden ist. Dies erleichtert die Pflege, weil es dadurch einfach geworden ist, ein Objekt durch ein anderes Objekt. zu ersetzen. Es kann sein, dass der Softwareentwickler ein falsches Objekt ausgewählt hat. Damit nicht die ganze Anweisung gelöscht und nochmals erzeugt werden muss, ist vorgesehen, dass in einem Anweisungsabschnitt eine Stelle markiert ist. Durch Klick auf die markierte Stelle wird die Auswahlliste wieder aufgerufen, mit welcher der Anweisungsabschnitt erstellt worden ist. Eine solche Markierung ist in den Beispielen fett gedruckt. Zum Beispiel:
>Konfig Schreiben: **Visu**\TestScreen\ LED. 20°*C*. **(Sichtbar**) = ***Ein***
>**Visu**<, >**sichtbar**< und >**Ein**< sind fett gedruckt, wodurch durch Klick auf eines dieser fettgedruckten Stellen, ein anderes Objekt ausgewählt werden kann.

Es ist gemäß Patentanspruch 19 erfindungsgemäss vorgesehen, dass Anweisungen in Form von Sequenzen angelegt werden können, wobei die einzelnen Sequenzen mit Kommentaren (Infozeilen) versehen werden können, wobei die Kommentarzeilen in die Dokumentation des Programmbausteins automatisch aufgenommen werden, und die Dokumentation der Programmbausteine automatisch in die Dokumentation des Anwendungsprogramm aufgenommen werden. Es ist anzumerken, dass die Qualität von Programmen von der Arbeit der Softwareentwickler abhängig ist. Dabei spielt die Dokumentation des Programmcode eine wichtige Rolle. Es sind schon sehr viele Programme dadurch entwertet worden, dass ein nachfolgender Softwareentwickler nicht mehr in der Lage war, den vom Vorgänger erstellten Programmcode zu entschlüsseln. Diesen Umstand möchte die Erfindung dadurch verbessern, dass dem Softwareentwickler eine Methode anhand gegeben wird, um ihn zu veranlassen, strukturiert in Form von Programmsequenzen zu denken und dies programmtechnisch umzusetzen. Im Sinne des prozessualen Programmierens ist eine weitere Ebene, Programmsequenz genannt, vorgesehen. Dadurch kann man ein Anwendungsprogramm hierarchisch strukturieren. Dabei ist die oberste Ebene das Anwendungsprogramm. Die nächste Ebene sind die Programmbausteine (Prozeduren), dann die Programmsequenzen und die unterste Ebene sind die Anweisungen.

Eine Sequenz sollte aus einer oder mehreren Anweisungen, die zusammen eine Teilaufgabe (Subaufgabe) ergeben, bestehen. Diese Teilaufgaben sollten einen Bezug zum zugrundeliegenden Prozess haben. Die einzelnen Sequenzen sind mit Kommentaren in Form von Infozeilen zu versehen, die den Bezug zum Prozess erkennen lassen. Das folgende Beispiel demonstriert das Prinzip anhand eines Ereignisbaustens, der durch einen Timer zyklisch aufgerufen wird:

### Timerbaustein Dreipunktregler

>Info: Zyklischer Aufruf jede Sekunde<
>Info: Test der Schranktemperatur auf oberen Grenzwert<
>Frage Wenn **Kana**l\AnEin. *Schranktemp.* >= 37,1 dann
   >Zuweise Wert: **Kanal**\ DigAus. *Kühlung =* **Ein**<
>Wenn Nein dann<
   >Zuweise Wert: **Kanal**\ DigAus. *Kühlung =* **Aus**<
>Ende Frage
**>Info:** Test der Schranktemperatur auf unteren Grenzwert

### Baustein Ende

Die **Info**: Zeilen sind die Kommentare, die die Sequenzen beschreiben. Eine Info Zeile sollte jeweils am Anfang einer Sequenz stehen. Die Kommentare der Programmsequenzen werden chronologisch in die Dokumentation des Programmbausteines aufgenommen. Somit lassen sie die prozessuale Funktion des Programmbausteines erkennen. Die Programmbausteine mit den Kommentaren der Programmsequenzen werden erfindungsgemäss automatisch in die Dokumentation des Anwendungsprogrammes aufgenommen. Im obigen Beispiel würde die Bausteindokumentation we folgt aussehen:

### Dokumentation:

### Timerbaustein Dreipunktregler

>Zyklischer Aufruf jede Sekunde<
>Test der Schranktemperatur auf oberen Grenzwert<
>Test der Schranktemperatur auf unteren Grenzwert<

### Ende Timerbaustein.

Es ist gemäß Patentanspruch 20 erfindungsgemäss vorgesehen, dass Hauptobjekte in Form von Formularen, Reports genannt, vorgesehen sein können. Solche vorgefertigten Objekte ermöglichen es dem Programmentwickler, Protokolle (Reports) in seine Anwendung aufzunehmen, wobei der daraus resultierende Programmieraufwand sehr begrenzt bleibt. Es können einseitige und mehrseitige Reports, versehen mit bibliographischen Einträgen, vorgesehen werden. Die Reportobjekte sind Hauptobjekte, die Reportseiten sind ebenfalls Hauptobjekte. Auf den Reportseiten können Objekte, Felder genannt, installiert werden. Es können Felder vorgesehen sein, denen Texte, Tabellen, Bilder oder Diagramme zugewiesen werden können. Der Report und die Seiten des Reports werden im Bildschirmdialog angelegt und konfiguriert. Auf den einzelnen Seiten des Reports können Objekte, Felder genannt, installiert und im Bildschirmdialog konfiguriert werden. Reports, Seiten des Reports und Feldobjekte werden automatisch in die Auswahllisten aufgenommen. Feldobjekte können mit Hilfe der >Zuweise Wert< Operation mit Dateninhalten (Texte, Bilder und Diagramme) versehen werden. Die Reports können per Programmanweisungen geöffnet/geschlossen und ausgedruckt werden. Die Dateninhalte können als Datensätze gespeichert werden, wodurch sie zu beliebigen Zeitpunkten wieder verfügbar sind. Die Daten, z. B. von Versuchsergebnissen, können dann auch in übergeordneten Datenbanken genutzt werden. Das folgende Beispiel demonstriert die Möglichkeiten:
>Veranlasse öffne: **Report\** *Test*
>Veranlasse Öffne: **Reportdatei\** Test (Datum)
>Zuweise Wert: **Report\** *Seite 1\ TesA Text.Ergebnis = LVErgebnisA<*
.
.
>Veranlasse Schliesse: **Report\** *Test*
>Veranlasse Schliesse: **Reportdatei\** Test (Datum).

Das Hauptobjekt ist **>Report\** *Test<.* >Report< ist die Kategorie und *>Test<* der Name des Reports. Das korrespondierende Hauptobjekt ist **>Reportdatei\** *Test* (Datum)<, in welches der aktuelle Datensatz geschrieben wird. Der Dateiname setzt sich aus dem Namen des Reports *>Test<* und einen weiteren Namensteil, der das aktuelle Datum enthält, zusammen. Das Datum wird automatisch vergeben. Mit der >Zuweise Wert< Operation wird dem Feld *>Text.Ergebnis<* der Wert der Variablen > ***LV**ErgebnisA<* zugewiesen. Daurch wird im Report dieser Wert in das Textfeld eingetragen. Nun können weitere Felder mit Daten beschrieben werden. Danach wird der Report und die korrespondierend Datei wieder geschlossen. Der Report kann dann auf dem Bildschirm angezeigt und ausgedruckt werden.

Es ist gemäß dem System-Patentanspruch 21 erfindungsgemäss vorgesehen, dass Hauptobjekte in Form von Eingabebildschirmen zur Eingabe von Rezepten bzw. Parameter vorgesehen sein können. Dadurch werden dem Softwareentwickler neue Möglichkeiten bei einem begrenzten Programmieraufwand anhand gegeben. Eingabebildschirme ermöglichen es dem Operator, Daten als Rezepte oder Parameter einzugeben. Solche Daten werden in der Forschung als Versuchsparameter bezeichnet, in prüftechnischen Anwendungen als Prüfparameter, bei Mischprozessen als Rezepte. Kennzeichen dieser Daten ist es, dass sie vor Start der Anwendung verfügbar sein müssen, da die Anwendung auf diese Daten zugreifen soll. Solch eine Anwendung kann ein Mischprozess, ein Produktprüfung oder ein Versuch sein. Es ist zweckmässig vorzusehen, dass Datensätze, die Parameter oder Rezepte enthalten, als Konserven speicherbar sind, sodass sie auf Vorrat angelegt werden können. Solche Eingabebildschirme, auch Parameterbildschirme genannt, sind erfindungsgemäss Hauptobjekte. Sie enthalten Objekte. Diese können Texteingabe-, Auswahlbox- (Pulldownmenu), Beschriftungs-, Tabellenobjekte sein. Ein Programmentwickler wird, wenn er Parameterbildschirme vorsieht, Dateneingabeobjekte auf dem Parameterbildschirm platzieren und mit den gewünschten Eigenschaften versehen. Programmanweisungen können dann auf die eingegebenen Daten zugreifen. Mit den folgenden Anweisungen können Parameter gespeichert und geladen werden.
>Veranlasse Speichern: **ParDatei** *(LVResult)<*
>Veranlasse Lade: **ParDatei** *(LVResult)<*

Für **>ParDatei<** kann der Operator im Laufzeitmodus eine Parameterdatei auswählen oder eine neue Parameterdatei anlegen. Nach der Eingabe durch den Operator wird das Programm fortgesetzt. In der Variablen *>LVResult<* ist ein Wert abgespeichert, der aussagt, ob die Anweisung korrekt ausgeführt wurde. In diesem Beispiel ist **>ParDatei<** das Hauptobjekt. Es ist die Summe aller Parameterdateien, die mit dem Parameterschaubild korrespondieren. Die einzelne Parameterdatei enthält jeweils einen Datensatz, der im Parameterschaubild durch einen Operator eingegeben wurde. Somit sind der Dateninhalt des Hauptobjektes **>ParDatei<** Parameterdateien, die mit diesem Parameterschaubild korrespondieren. Es wäre auch möglich, besonders bei Reihenversuchen, einen Versuchsreihennamen zu vergeben und zur Differenzierung das aktuelle Datum oder eine laufende Nummer vorzusehen. Zum Beispiel:
>Veranlasse Speichern: **ParDatei**\*Versuchsname*+(Datum) *(**LV**Result)<*

Es ist gemäß Patentanspruch 22 erfindungsgemäss vorgesehen, dass eine Gruppe von Objekten vorgesehen ist, die Kanalobjekte genannt werden. Kanalobjekte ermöglichen es dem Programm, mit technischen Prozessen zu kommunizieren. Solche Kanalobjekte oder Kanäle entstehen durch Mess- und Steuerketten. Als Quellen der Messketten dienen Sensoren, die Prozessdaten erfassen (Messeingänge). Wenn ein Prozess via Kanäle gesteuert werden soll, so dienen Aktoren als Ziel, die steuernd in den Prozess eingreifen können. Als Mittler zwischen den Sensoren und Aktoren und dem PC dient eine sogenannte Mess- und Steuer Hardware. Kanalobjekte sind digitale und analoge Ein- und Ausgänge. Kanalobjekte, sobald sie konfiguriert und der Anwendung zugeteilt sind, werden automatisch in Auswahllisten aufgenommen, wodurch per Anweisungen Daten (Steuerdaten) in Ausgangskanäle geschrieben und Daten (Messdaten) von Eingangskanälen gelesen werden können. Es ist wichtig anzumerken, dass es sich um Online-Daten handelt. Somit können damit auf einfache Weise Prozesse gesteuert und überwacht werden. Das folgende Beispiel zeigt, wie ein Analogmesswert in einem graphischen Anzeigeobjekt online angezeigt werden kann.
>ZuweiseWert: **Visu**\Ausgabe\DigAnz.Temp = ***Kanal**\AnEin.Temperatur<.*

Die Funktion ist folgende: Der Digitalanzeige (DigAnz) mit dem Namen *Temperatur >DigAnz.Temperatur<* (links vom Gleichheitszeichen) wird der Wert des Kanalobjektes Analoganzeige >AnEin< mit dem Namen >*Temp*< zugewiesen (>**Kanal**\AnEin. *Temp*<).

Erfindungsgemäss sind gemäß Patentanspruch 23 globale Objekte vorgesehen. Alle bis jetzt beschriebenen Objekte sind anwendungsbezogen. Eine Anwendung kann z. B. die Überwachung und Steuerung eines Versuchs, eines Mischprozesses oder eines Prüfstandes sein. Die Regel ist jedoch, dass in einem Fabrikationsprozess eine Reihe von Geräten (z. B. Mischern) vorhanden sein können. In einem Forschungsinstitut kann eine Reihe von Versuchen laufen. In einem Prüffeld können gleichzeitig mehrere Produktprüfungen auf unterschiedlichen Prüfständen ablaufen. Aus diesen Gründen sind erfindungsgemäss Projekte und Anwendungen vorgesehen, wobei einem Projekt eine Reihe von Anwendungen zugeordnet sein können. An sich sind diese Anwendungen autark. Es kann jedoch sein, dass z. B. die Bedienung von einem zentralen Rechner vorgenommen werden soll, wenn Qualitätsdaten aller Anwendungen gesammelt und einer zentralen Datenbank zugeführt werden sollen. Um dies zu ermöglichen, sind globale Variablen und globale Objekte vorgesehen. Alle Anwendungen können mit den globalen Objekten ----kommunizieren.-Auf einem-zentralen-Rechner-als Mensch/Maschine-Schnittstette für alle Anwendungen können globale Objekte auf Visualisierungsbildschirmen installiert sein. Eine Untergruppe der globalen Objekte sind globale Variable. Solche Variable sind in den Auswahllisten der Anwendungen verfügbar, sodass auf diese Variablen schreibend und lesend, von allen Anwendungen aus, zugegriffen werden kann. Zum Beispiel:
>ZuweiseWert: ***GV**Temperatur-Raum3 = **LV**Raumtemperatur<.*

Die Raumtemperatur, gespeichert in der lokalen Variablen *>**LV**Raumtemperatur<,* wird der globalen Variablen *>**GV**Temperatur-Raum3<* zugewiesen. Dadurch ist der Wert der Raumtemperatur des Raum3 global verfügbar. Ein weiteres Biespiel:
>Frage Wenn ***GV**Start-Versuch 2* = Ein dann<
   >Zuweise Wert: ..... <
>Ende Frage<.

Hier wird in der Anwendung "Versuch 2" getestet, ob die globale Variable >**GV**Start-*Versuch* 2< auf logisch >**Ein**< steht. Wenn dies Fall ist, so kann die Anwendung "Versuch 2" gestartet werden. Somit kommt das Startsignal für den Start der Anwendung "Versuch 2" von einer globalen übergeordneten Instanz.

Es ist gemäß Patentanspruch 24 erfindungsgemäss vorgesehen, dass Typen von Programmbausteinen (Prozeduren) vorgesehen sind, die mit einem individuellen Namen versehen werden können. Dadurch ist es möglich, in einem Programmablauf mehrere Bausteine des gleichen Typs einzusetzen. Weiterhin ist vorgesehen, dass jedem Bausteintyp ein spezielles Symbol in einem Strukturschaubild zugeordnet ist. Dadurch wird das Erkennen der Struktur des Programmablaufs sehr erleichtert. Dabei wird besonders darauf aufmerksam gemacht, dass die Anzahl unterschiedlicher Typen von Programmbausteinen klein ist. Weiterhin sind die Bausteintypen in zwei Kategorien unterteilt. Bei der einen Kategorie werden die Programmbausteine in einem Programmablauf seriell (chronologisch) abgearbeitet. Dieses sind die Typen Startbaustein, Ereignisbaustein Endbaustein und Ablaufbaustein, wodurch sie im Strukturschaubild weitgehend seriell angeordnet sind. Ablaufbausteine können aber auch parallel im Strukturschaubild erscheinen. Die Regel besagt aber, dass bei einem Durchlauf nur einer dieser parallel angeordneten Ablaufbausteine abgearbeitet werden kann. Die andere Kategorie enthält Bausteine, die parallel zu seriellen Bausteinen angeordnet sind. Hierzu gehört der Typ Parallelbaustein, der von einem seriellen Baustein aufgerufen werden kann und parallel zu anderen Bausteinen innerhalb eines Programmablaufs arbeitet. Dadurch, dass dem Anwender computergestützt zur Erstellung des Programmcodes nur wenige Typen der Programmbausteine aus zwei Kategorien bereitgestellt werden, wird der Anwender zur Strukturierung der Aufgabe angeleitet. Durch die vorgegebenen Regeln zum Verknüpfen der Programmbausteine wird automatisch der Ablauf bei der Bearbeitung des Programmcodes festgelegt, der sich aus den einzelnen Programmbausteinen zusammensetzt. Insofern erfolgt eine computergestützte Führung des Softwareentwicklers bei der Erstellung der Struktur der Anwendung. Durch die Umsetzung einer Programmieraufgabe mit spezialisierten Prozeduren verfügt der Anwender über eine Art eines graphischen Inhaltsverzeichnisses.

Es ist weiterhin gemäß Patentanspruch 25 erfindungsgemäss vorgesehen, dass als ein Bausteintyp ein Ereignisbaustein vorgesehen ist, der immer am Anfang eines selbstständigen Programmablaufs positioniert ist. Der Ereignisbaustein wird dann eingesetzt, wenn der Start dieses Programmablaufs, der mit einem Ereignisbaustein beginnt, durch ein Ereignis ausgelöst wird. Ein solches Ereignis kann in einem Objekt einer Visualisierungsoberfläche auftreten. Ein Ereignis kann die Betätigung eines virtuellen Schalters auf der Visualisierungsoberfläche sein. Es kann aber auch das Überschreiten eines Grenzwertes einer physikalischen Größe sein. Der Ereignisbaustein verfügt über einen Ausgang, mit dem entweder ein serieller Baustein vom Typ Ablaufbaustein oder Endbaustein aufgerufen werden kann. Welcher Baustein aufgerufen wird liegt im Ermessen des Programmentwicklers. Für den Programmentwickler stehen weitere Ausgänge beliebiger Zahl zur Verfügung, mit denen Parallelbausteine aufgerufen werden können. Der Ereignisbaustein verfügt über ein eigenes Symbol im Strukturdiagramm, das einen Ausgang enthält, der mit einem seriellen Baustein verbunden werden kann.

Es ist weiterhin gemäß Patentanspruch 26 erfindungsgemäss vorgesehen, dass als ein serieller Bausteintyp ein Startbaustein vorgesehen ist, der immer am Beginn eines selbstständigen Programmablaufs steht. Er wird dann eingesetzt, wenn der Start dieses Programmablaufs durch eine manuelle Massnahme wie Maus- oder Tastaturbedienung erfolgt oder einem Autostart, wenn dies im Betriebssystem des Computers so eingestellt ist. Der Startbaustein verfügt über einen Ausgang, mit dem ein serieller Baustein vom Typ Ablaufbaustein oder Endbaustein aufgerufen werden kann. Welcher Baustein aufgerufen wird liegt im Ermessen des Programmentwicklers. Für den Programmentwickler stehen weitere Ausgänge beliebiger Zahl zur Verfügung, mit denen Parallelbausteine aufgerufen werden können. Der Startbaustein verfügt über ein eigenes Symbol im Strukturdiagramm, das einen Ausgang enthält, der mit einem seriellen Baustein verbunden werden kann. Im erfindungsgemäßen System ist der Bausteintyp Startbaustein der Kategorie Ablauf so eingerichtet, dass dieser einen anderen Typ der Kategorie Ablauf mit Ausnahme des Bausteintyps Ereignisbaustein aufruft. Dies kann somit ein Ablaufbaustein oder ein Endbaustein sein. Darüber hinaus kann der Startbaustein auch einen Parallelbaustein aufrufen, welcher der Kategorie Parallel zugeordnet ist.

Es ist weiterhin gemäß Patentanspruch 27 erfindungsgemäss vorgesehen, dass als weitere serielle Bausteintypen der Typ Ablaufbaustein und der Typ Endbaustein vorgesehen ist. Der Ablaufbaustein ist zwischen zwei seriellen Bausteinen angeordnet. Er verfügt mindestens über einen Eingang und einen Ausgang für serielle Bausteine. Durch den Eingang kann der Ablaufbaustein von einen anderen Baustein (Start-, Ereignis- oder Ablaufbaustein) aufgerufen werden. Durch den Ausgang kann der Ablaufbaustein seinerseits einen seriellen Baustein des Typs Ablaufbaustein oder Endbaustein aufrufen. Die Ablaufbausteine werden generell durch das System seriell verknüpft, wodurch festgelegt ist, dass ihre Abarbeitung chronologisch erfolgt. Aufgrund der beschriebenen vorgegebenen Regelung zum Verknüpfen der Programmbausteine kann zu einem vorgegebenen Zeitpunkt immer nur ein Programmbaustein der Kategorie Ablauf in einem selbsständigen Programmablauf aktiv sein. Dabei ist es zweckmäßig, wenn wie obenstehend schon angegeben, Abläufe bedingte Verzweigungen ermöglichen. Dadurch können im Strukturdiagramm Ablaufbausteine auch seriell angeordnet sein angeordnet sein. Aber nur einer der parallel angeordneten Ablaufbausteine kann bei einem Durchlauf aufgerufen und abgearbeitet werden. Der Endbaustein ist der Abschluss eines Ablaufs. Er ist das letzte Glied serieller Bausteine. Er verfügt über einen Eingang für serielle Bausteine. Durch den Eingang kann der Endbaustein von einen anderen Baustein (Start-, Ereignis- oder Ablaufbaustein) aufgerufen werden. Bei dem Ablaufbaustein und Endbaustein können weitere Ausgänge vorgesehen werden, um Parallelbausteine aufzurufen. Ablaufbaustein und Endbaustein verfügen über ein eigenes Symbol im Strukturdiagramm.

Es ist weiterhin gemäß Patentanspruch 28 erfindungsgemäss vorgesehen, dass als ein paralleler Bausteintyp ein Parallelbaustein vorgesehen ist, der immer über einen Eingang verfügt, mit dem dieser Baustein von einen anderen Baustein (Startbaustein, Ereignisbaustein, Ablaufbaustein, Endbaustein oder Parallelbaustein) aufgerufen werden kann, und dessen Programmanweisungen unabhängig von dem aufrufenden Baustein abgearbeitet werden, und der über ein eigenes Symbol im Strukturdiagramm verfügt, das über einen Eingang verfügt, mit dem der Baustein mit einem anderen Baustein verbunden werden kann. Durch die Parallelbausteine ist die Möglichkeit gegeben in einem selbstständigen Programmablauf gleichzeitig mit der Abarbeitung von seriellen Bausteinen parallele Funktionen auszuführen, wie zum Beispiel gleichzeitiges Zuführen flüssiger Komponenten in einen Behälter.

Es ist weiterhin gemäß Patentanspruch 29 erfindungsgemäss vorgesehen, dass voneinander unabhängige Programmabläufe in beliebiger Zahl vorgesehen sein können, die parallel ablaufen können, wobei ein Ablauf durch einen Startbaustein gestartet wird und weitere Abläufe in beliebiger Zahl durch Ereignisbausteine gestartet werden können. Hierdurch verdeutlicht sich auch der Unterschied zu einem Parallelbaustein. Dieser arbeitet zwar auch parallel zu einem Ablauf, wird jedoch von einem Programmbaustein des Typs Ablauf über einen Programmaufruf aufgerufen und ist somit diesem Ablauf zugehörig.

Es ist weiterhin gemäß Patentanspruch 30 erfindungsgemäss vorgesehen und überaus hilfreich bei der Erstellung von Programmcode für den Softwareentwickler, wenn im erfindungsgemäßen System den ausgewählten Programmbausteinen jeweils ein Symbol zugeordnet ist, das in einem Strukturschaubild dargestellt wird. Dabei kann jedem Typ von Programmbaustein ein vorgegebenes Symbol zur Darstellung im Strukturschaubild zugeordnet sein. Nach der Auswahl der Bausteine verwendet das System unter Berücksichtigung der vorgenannten Regeln für die Verknüpfung der Programmbausteine diese Symbole automatisch mittels Linien zur Darstellung der seriellen oder parallelen Abarbeitung, wodurch die Programmstruktur und der Programmverlauf dargestellt sind. Das System erzeugt automatisch Pfeile in den Verbindungslinien zwischen den Symbolen der Programmstruktur erleichtert.

Es ist weiterhin gemäß Patentanspruch 31 erfindungsgemäss vorgesehen, dass Schleifen vorgesehen werden können, die es ermöglichen, Programmbausteine mehrfach zu durchlaufen. Schleifen über ein oder mehrere Programmbausteine ermöglichen es dem Softwareentwickler, gut strukturierte Programme zu schreiben, wenn die Aufgabe besteht, Programmabläufe zu wiederholen. Ein solches Beispiel sind Prüfvorgänge in der Serienfertigung. Jedesmal, wenn ein Prüfling zur Prüfung ansteht, wird der Prüfzyklus gestartet und durchlaufen. Am Ende der Prüfung ermöglicht es die Schleife, an den Anfangspunkt der Prüfung zurück zu kehren, ohne die Anwendung zu verlassen.

Die Erfindung wird im Folgenden durch das Beschreiben einer Ausführungsform (System, als Hardware realisiert) unter Bezugnahme auf die beiliegenden Zeichnungen beschrieben.

Es zeigen:
- Fig. 1: einen schematischen Aufbau als Datenflussdiagramm, das das erfindungsgemäße System enthält,
- Fig. 2: das Operationsmenu, wenn eine neue Anweisung angelegt werden soll,
- Fig. 3: das Beispiel einer Auswahlliste für Objekte,
- Fig. 4a bis 4h: Erstellung einer >Zuweise Daten< Anweisung,
- Fig. 5a bis 5c: wie ein Objekt durch ein anderes Objekt ersetzt werden kann,
- Fig. 6: Programmbausteinsymbole des Strukturschaubildes,
- Fig. 7: ein Beispiel eines Ablaufs, der durch einen Startbaustein gestartet wird,
- Fig. 8: ein Beispiel eines Ablaufs, der durch einen Ereignisbaustein gestartet wird**.**

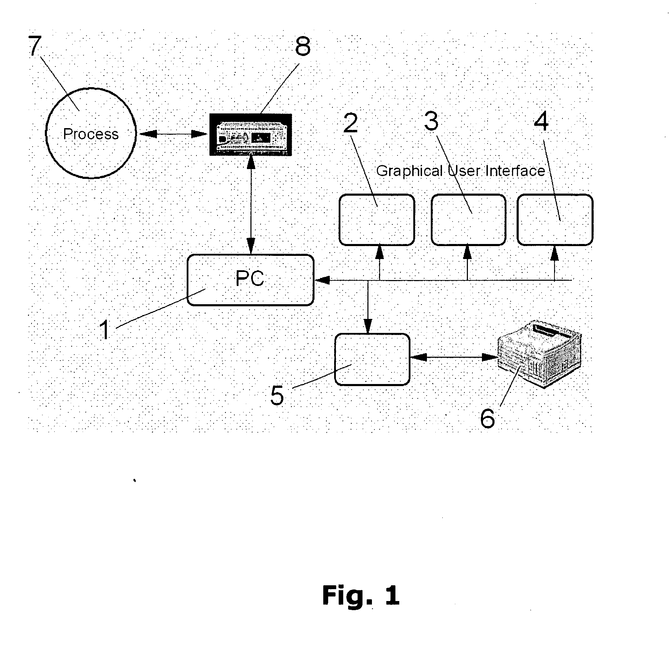

Fig. 1 zeigt in einer Prinzipskizze ein erfindungsgemäßes System mit einer Ausführungsumgebung zum computergestützten Erstellen und Abarbeiten von Programmcode. Diese umfasst einen PC 1, welcher ein Datenverarbeitungsmittel in Form einer CPU, Speicher sowie Eingabemittel in Form einer Tastatur und Computermaus aufweist. Der PC 1 ist ferner an Anzeigemittel in Form eines Bildschirms 2, 3, 4 angeschlossen, auf welchen Visualisierungsschaubilder, Parameterschaubild sowie Strukturschaubild dargestellt sind. Darüber hinaus weist der PC 1 eine Schnittstelle auf, an der Mess- und Steuerhardware 8 angeschlossen ist, Damit die Rechnereinheit mit einem Prozess 7 nach außen kommunizieren kann. Ferner ist der Rechner über eine Schnittstelle mit einem Drucker 6 verbunden.

Das Parameterschaubild 2 dient zur Anzeige von über die Tastatur eingegebenen Parameter. Somit können Daten eingegeben werden, die den nachfolgenden Programmablauf beeinflussen. Auf diese Weise können auch Daten für einen späteren Durchlauf eingegeben werden, wenn ein erstelltes Programm gerade abläuft. Somit können Parameterdateien für spätere Programmabläufe als Konserven gespeichert werden. Das Visualisierungsschaubild 3 dient einerseits zum installieren von Objekten während der Programmerstellung und ferner zum Beobachten und Bedienen der Objekte während eine Anwendung abläuft. Das Strukturschaubild 4 dient im wesentlichen zum Strukturieren der Programmieraufgabe während der Erstellung des Programmcodes. Läuft der erstellte Programmcode ab, kann im Laufzeitmodus über eine Markierung von Programmbausteinen bzw. von deren Symbolen angezeigt werden, welche Programmbausteine beziehungsweise welcher Programmbaustein gerade abgearbeitet wird.

Während der Laufzeit ist dem Anwender der Zugang zum erstellten Programmcode, der auch im Speicher des PC 1 abgelegt ist, verwehrt. Dieser kann im Entwicklungsmodus über die Bildschirme 2, 3, 4 bearbeitet werden. Der Funktionsblock Report 5 beinhaltet auch die Konfiguration der Datenausgabe in Form von Formularen, die vom Drucker 6 ausgegeben werden. In der angegebenen Ausführungsform weist das System eine Umweltschnittstelle zur Verbindung mit Sensoren und Aktoren des Prozesses 7 auf, mit denen Messdaten erfasst und Steuersignale ausgegeben werden können.

Der Anwender kann mittels des in Fig. 1 angegebenen Systems im Strukturschaubild 4 computerunterstützt verschiedene Typen von Programmbausteinen auswählen, die dann im Strukturschaubild angezeigt werden. Diese Programmbausteine werden als Symbole dargestellt und können im Strukturschaubild auf die Oberfläche gezogen und angeordnet werden. Sie werden dann vom System automatisch mit vorgegebenen Regeln über Linien verbunden, wodurch das Gerüst des zu erstellenden Programms festgelegt ist. Letztlich kann mit dieser computergestützten Anordnung von Programmbausteinen jedes beliebige Programm erzeugt werden. Durch Anwahl des jeweiligen Bausteins bzw. des Symbols wird der Zugang zu dem Programmcodeabschnitt des Bausteins ermöglicht.

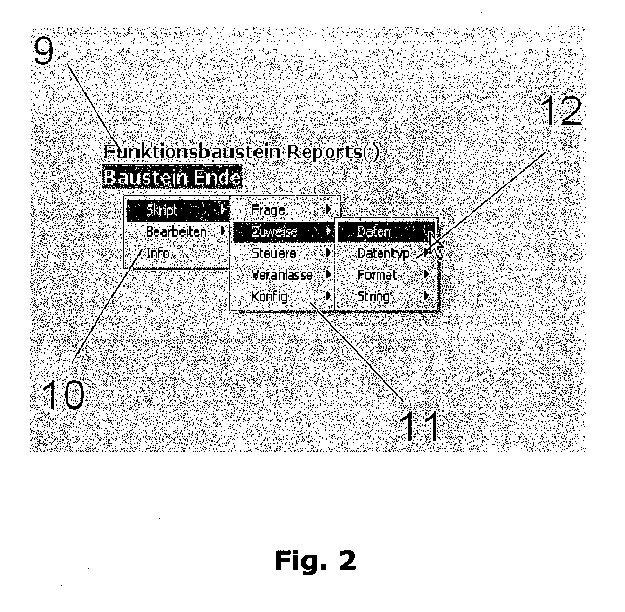

Zusammenfassend zeigt Fig. 1 also ein System, das als Datenflussdiagramm dargestellt ist, in welches die Erfindung als Funktionsblöcke 2, 3, 4, 5 eingebaut ist. Fig. 2 zeigt, dass zeigt das Operationsmenu. Dies erscheint, wenn der Softwareentwickler eine neue Anweisung anlegen möchte. Dies geschieht durch einen Mausklick mit der rechten Maustaste auf die Zeile 9 oberhalb der, die neue Anweisung eingefügt werden soll. Bei der ersten Ebene 10 kann wahlweise der Skript (Erstellung von Anweisungen) oder Bearbeiten (kopieren, einfügen...) oder das Einfügen einer Infozeile ausgewählt werden. Wenn Skript ausgewählt wird, so erscheint die Gruppe der Operationen. 11. Um seine prozessuale Aufgabe zu lösen, muss sich der Softwareentwickler für eine der angezeigten Operationsgruppen 11 entscheiden. Dies ist nicht schwierig, da ihm die Gruppen eine Denkverbindung zu seiner prozessualen Aufgabe liefern. Sollten dennoch Zweifel bestehen, so kann er sich die weiteren Ebenen 12 des Kontextmenus ansehen. Im folgenden wird ausführlich gezeigt, welche Gedankengänge erforderlich sind, um die geeignete Operation auszuwählen.

Für die Operationsgruppe Frage wird er sich entscheiden, wenn er eine Information einholen möchte. Eine typische Rohanweisung, die erscheint, wenn er sich für eine Operation der Operationsgruppe Frage entschieden hat, ist
>Frage Wenn Objekt <>= Objekt dann<
>Ende Frage <

Für die Operationsgruppe Zuweise wird er sich entscheiden, wenn er Daten einem Objekt zuweisen möchte, die in einem anderen Objekt gespeichert sind, oder wenn er Daten formatieren oder Daten einen Datentyp zuweisen möchte. Eine typische Rohanweisung, die erscheint, wenn er sich für eine Operation der Operationsgruppe Zuweise entschieden hat, ist
>Zuweise Daten: Objekt = Objekt<

Für die Operationsgruppe Veranlasse wird er sich entscheiden, wenn er den Zustand eines Hauptobjektes verändern möchte (zum Beispiel Öffnen/Schliessen, Starten/stoppen, Anlegen/Löschen), und wenn er Datensätze von einem Hauptobjekt auf ein anderes übertragen möchte. Eine typische Rohanweisung, die erscheint, wenn er sich für eine Operation der Operationsgruppe Vergleiche entschieden hat, ist
>Veranlasse öffne: Hauptobjekt<

Für die Operationsgruppe Steuere wird er sich entscheiden, wenn er steuernd in den Programmablauf eingreifen möchte. Dies können Aufrufe von Programmbausteinen, Wiederholungen, oder Wartezyklen sein. Eine typische Rohanweisung, die erscheint, wenn er sich für eine Operation der Operationsgruppe Steuere entschieden hat, ist
>Steuere Aufruf: Objekt <

Für die Operationsgruppe Konfiguriere wird er sich entscheiden, wenn er an dem Erscheinungsbild eines graphischen Objektes oder der Konfiguration einer Schnittstelle etwas ändern möchte. Eine typische Rohanweisung, die erscheint, wenn er sich für eine Operation der Operationsgruppe Konfiguriere entschieden hat, ist
>Konfiguriere: Objekt (Eigenschaft) = Var<

Dabei ist das Schlüsselwort Eigenschaft ein Subobjekt und hat einen Bezug zum Schlüsselwort Objekt, das meist ein graphisches Objekt ist. Var ist ein Schlüsselwort, das durch eine Variable, Konstante, Festwert oder Formel ersetzt werden kann.

Zusammengefasst ergeben sich folgende Gedankengännge beim Anlegen einer neuen Anweisung:

| | |
|---|---|
| Information einholen | → Operation Frage |
| Daten einem Objekt zuweisen | →Operation Zuweise |
| Zugriff auf .Hauptobjekte | →Operation Veranlasse |
| Programmablauf steuern | →Operation Steuere |
| Aussehen eines Objektes | → Operation Konfiguriere |

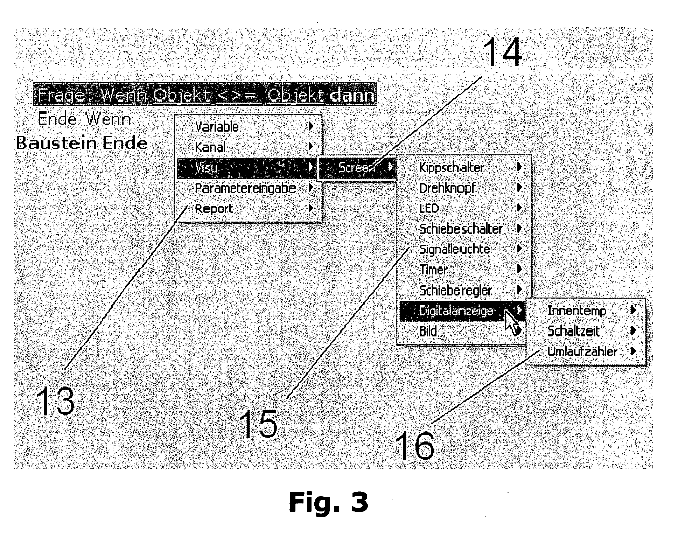

Fig. 3 zeigt das Beispiel einer Auswahlliste für Objekte. Der nächste Schritt zur weiteren Komplettierung einer Anweisung, nach dem die Operation festgelegt wurde, ist die Wahl der Objekte. Dieser Schritt wird dem Softwareentwickler wenig Kopfzerbrechen bereiten, da er, die in der Auswahlliste angezeigten Hauptobjekte und Objekte, zuvor installiert hat. Die angezeigte Auswahlliste enthält die Listenpunkte, die das Schlüsselwort Objekt links vom Operand <>= ersetzen können. Die Ebene 13 enthält die Kategorien der Objekte. Diese sind in der fertigen Anweisung Fett dargestellt. Sie dienen als Anker, wenn das ausgewählte Objekt nachträglich durch ein anderes ersetzt werden soll. Die Ebene 14 ist die Ebene der Hauptobjekte. Hauptobjekte enthalten, wie in der Patentbeschreibung erläutert, Objekte. Hier sind es Schaubilder, die installiert und mit individuellen Namen (Screen 1 und Screen 2) versehen sind. Die Installation von Objekten und Hauptobjekten erfolgt unabhängig vom Skript. Erst, wenn diese installiert sind, werden sie in den Auswahllisten erscheinen. Die Ebene 15 enthält die Objekttypen. Ausgewählt ist der Objekttyp LED. LED sind kleine (virtuelle) Signalanzeigen, die Ein- und ausgeschaltet sein können Diese Ebene ist notwendig, da von jedem Objekttyp mehrere Objekte auf einem Schaubild platziert sein können. Die Ebene 16 zeigt dann die auzuwählenden Objekte mit ihren individuellen Namen an. Hier stehen eine Anzahl LEDs (LED_1 bis LED_8 zur Auswahl bereit. Anhand der Auswahlliste Fig 3, wenn man den markierten Pfad verfolgt, ist leicht zu erkennen wie die Anweisung bei Wahl des Objektes *>LED_1<* aussehen wird.
>Frage Wenn **Visu**\ Schaubild. Screen\ LED. *LED_1* =<> Objekt dann<
>Ende Frage<.

Zur endgültigen Fertigstellung muss noch der Operand und das Schlüsselwort Objekt rechts vom Gleichheitszeichen ersetzt werden. Dann kann eine fertige Anweisung lauten:
>Frage Wenn **Visu**\ Schaubild. *Screen\* LED. ***LED*_** 1 = ***Ein*** dann<
>Ende Frage<

Hier wird die Frage gestellt, ob das LED mit Namen *>LED_1<* eingeschaltet ist.

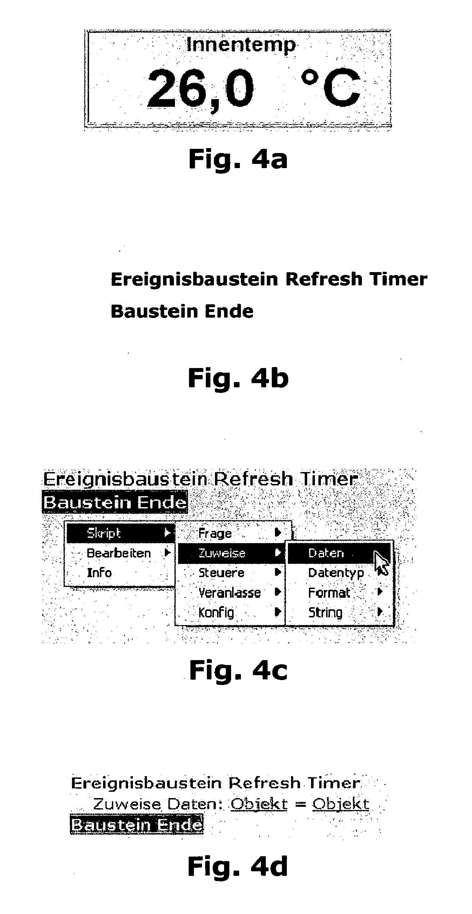

Die Figuren Fig. 4a bis 4h zeigen, wie eine Anweisung mit einer >Zuweise Daten< Operation erstellt wird. Die Aufgabe der Anweisung ist es, den Wert der Innentemperatur auf einem (virtuellen) digitalem Anzeigegerät Fig 4a anzuzeigen. Voraussetzung ist, dass zuvor das digitale Anzeigegerät Fig 4a auf einem Schaubild installiert wird. Dies geschieht dadurch, dass das Objekt aus der Symbolleiste auf den Bildschirm gezogen und positioniert wird. Danach kann es per Bildschirmdialog mit Eigenschaften wie Aussehen, Name versehen werden. Voraussetzung ist ferner das ein Ereignisbaustein entsprechend Fig. 4b angelegt wird. Dies geschieht dadurch, dass ein Ereignisbaustein mit Namen *>Refresh<* angelegt wird, wobei der Baustein immer nach 1000 millisec. automatisch ausgeführt wird.

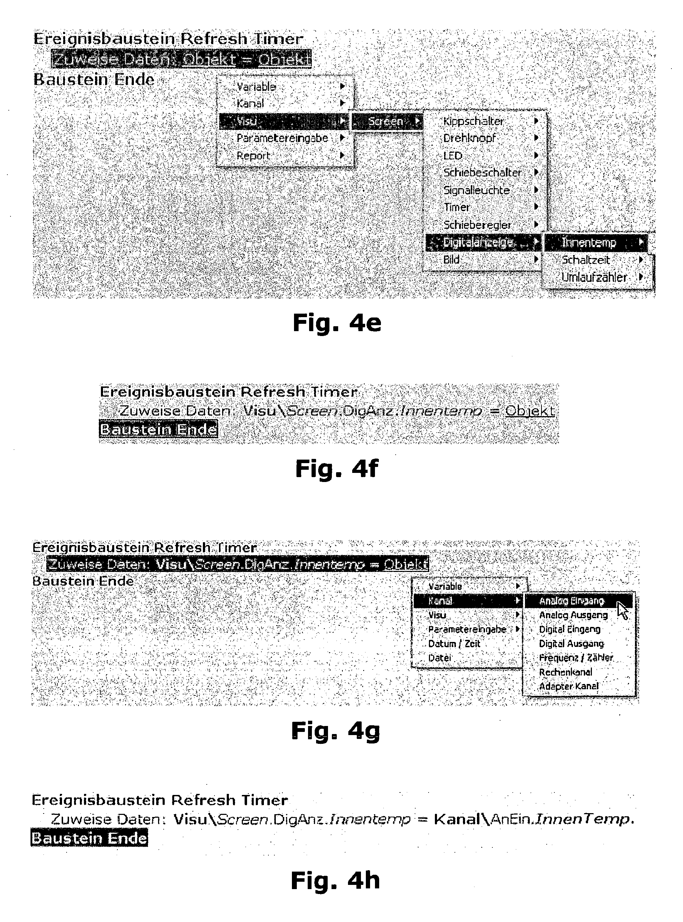

Nun kann die Anweisung >Zuweise Wert< erstellt werden. Das Ergebnis soll sein: >Zuweise Wert: Visu\Schaubild. *Screen\DigAnz.lnnentemp* = Kanal\AnEin. Temp< Im Klartext lautet diese Anweisung: Dem (virtuellen) Digitalen Anzeiger Fig. 4a >DigAnz< mit dem Namen *>Innentemp<* auf dem Schaubild >Screen< wird der Wert des Kanals >AnEin< mit dem *Namen >Temp<* zugewiesen. Durch die Zuweisung wird der Wert des Analogkanals *>Temp<* automatisch angezeigt. Die Erstellung der Anweisung wird in den folgenden Schritten dargestellt, wobei wie zuvor beschrieben, das Objekt Digitaler Anzeiger mit dem Namen "Innentemp" (Fig 4a) zuvor angelegt wurde sowie ein Timerobjekt mit dem Namen "Refresh", wodurch ein Ereignisbaustein (Fig 4b) angelegt wurde. Die Programmsequenz wird nun in den Ereignisbaustein (Fig 4b) eingefügt.
Schritt 1 (gemäß Figur 4c): Wahl der Operation >Zuweise Daten<
   Die Rohanweisung gemäß Figur 4d wird angezeigt.
Schritt 2: Ersatz des Schlüsselworts Objekt links vom Gleichheitszeichen gemäß Figur 4e.
   Das Objekt links vom Gleichheitszeichen wurde gemäß Figur 4f ersetzt.
Schritt 3: Ersatz des Schlüsselworts Objekt rechts vom Gleichheitszeichen gemäß Figur 4g.

Das Objekt rechts vom Gleichheitszeichen ist nun entsprechend Figur 4h ersetzt worden.

Damit ist die Anweisung fertiggestellt.

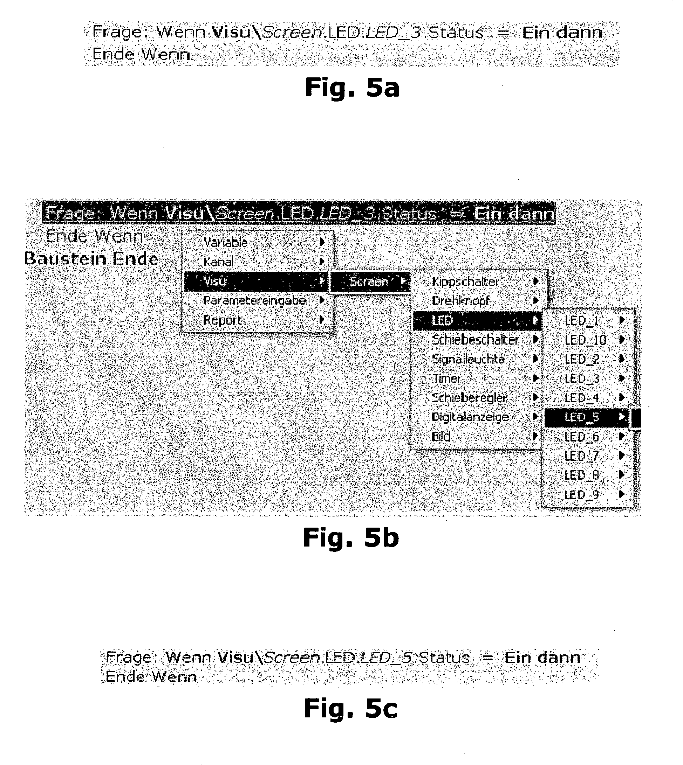

In den Figuren 5a, 5b und 5c wird gezeigt, wie ein Objekt durch ein anderes Objekt ersetzt werden kann.

In der Anweisung entsprechend Fig 5a soll das *>LED_3<* durch *>LED_5<* ersetzt werden

Durch Linksklick auf das das fettgedruckte Wort >Visu< (Fig 5b) öffnet sich das Objektmenu. Nun kann *>LED_3<* durch *>LED_5<* ersetzt werden.

In der Anweisung Fig 5c ist *>LED_3<* durch *>LED_5<* ersetzt worden.

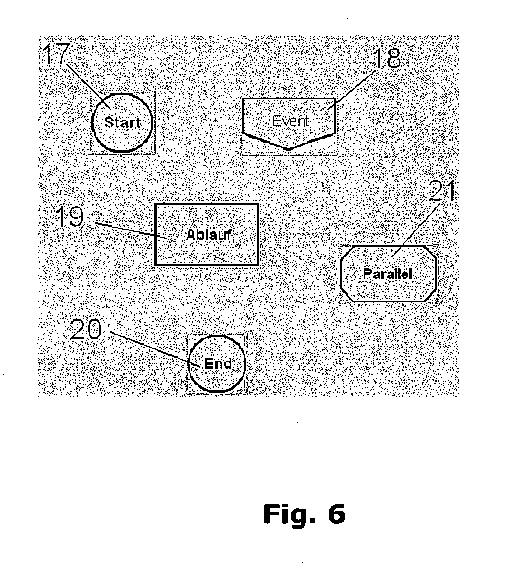

Fig. 6 zeigt mehrere, jeweils einen Programmbaustein darstellende Symbole, wie sie in einem Strukturschaubild verwendet werden. Der Bausteinkategorie Ablauf gehören die Typen Ablaufbaustein 19, Ereignisbaustein 18, Startbaustein 17 und Endbaustein 20 an. Abläufe werden vom System seriell verknüpft, wodurch ihre Arbeitsweise chronologisch ist. Somit kann zu einem gegebenen Zeitpunkt immer nur ein Baustein der Kategorie Ablauf aktiv sein. Abläufe ermöglichen bedingte Verzweigungen.

In der Figur ist daneben auch ein Bausteintyp Parallelbaustein bzw. dessen Symbol 21 gezeigt, welcher der Bausteinkategorie Parallel angehört. Parallelbausteine erledigen Aufgaben, die gleichzeitig, d.h. parallel zu Abläufen ausgeführt werden. Programmbausteine können im erfindungsgemäßen Programmiersystem nach vorgegebenen Regeln verknüpft werden. Der Startbaustein 17 ruft beispielsweise einen anderen Bausteintyp der Kategorie Ablauf außer dem Ereignisbaustein 18 auf. Dies kann ein Ablaufbaustein 19 oder ein Endbaustein 20 sein. Darüber hinaus kann der Startbaustein 8 auch einen Parallelbaustein 21 aufrufen.

Der Ereignisbaustein 18 wird durch Ereignisse, die im Programmverlauf eintreten können, aufgerufen und kann seinerseits einen Ablaufbaustein 19, einen Endbaustein 20 oder einen Parallelbaustein 21 aufrufen.

Der Start eines Ablaufs kann daher durch einen Startbaustein 17 oder einen Ereignisbaustein 18 erfolgen. Ein Ereignis, das den Start eines Ablaufs auslöst, kann beispielsweise die Anwahl eines Bedienobjektes in einem Visualisierungsschaubild sein.

Die implementierten Verknüpfungsregeln legen ferner fest, dass der Ablaufbaustein 19 entweder von einem Startbaustein 17, einem Ereignisbaustein 18 oder einem Ablaufbaustein 19 aufgerufen werden kann und seinerseits einen Ablaufbaustein 19, einen Endbaustein 20 oder einen Parallelbaustein 21 aufrufen kann. Darüber hinaus sind in Abläufen bedingte Verzweigungen möglich. Die Verknüpfungsregeln der beschriebenen Ausführungsform besagen ferner, dass der Endbaustein 20 den Abschluss eines Ablaufs bildet. Dieser wird entweder von einem Startbaustein 17, einem Ereignisbaustein 18 oder einem Ablaufbaustein 19 aufgerufen. Er kann seinerseits einen Parallelbaustein 21 aufrufen.

Dieser Parallelbaustein 21 arbeitet parallel zu Abläufen. Er wird entweder von einem Startbaustein 17, einem Ereignisbaustein 18, einem Ablaufbaustein 19 oder einem Endbaustein 20 aufgerufen. Der Parallelbaustein 21 selbst kann keinen Programmbaustein aufrufen.

Dem Anwender werden vom System nur die genannten Typen der Programmbausteine zur Auswahl angeboten, die sich in die Kategorien Ablauf und Parallel aufteilen lassen. Diese ausgewählten Programmbausteine werden dann wie in Fig. 6 angegeben mittels zugeordneter Symbole, welche vom Anwender mit einem Bezeichner wie einem Namen versehen werden können, im Strukturschaubild angezeigt.

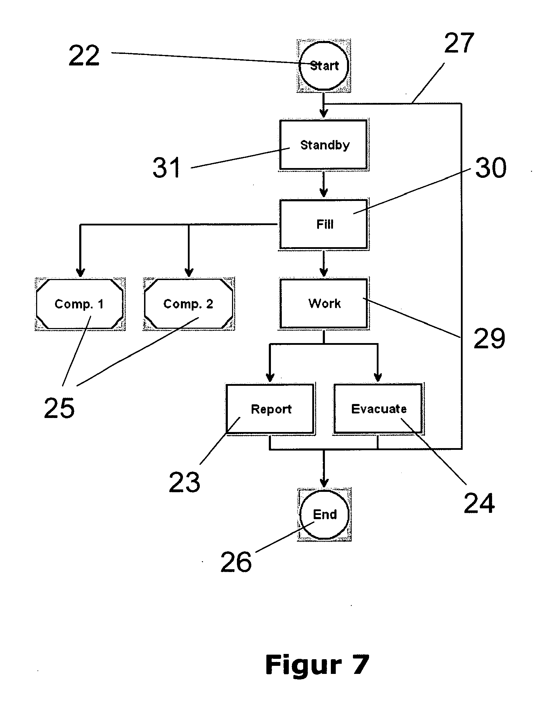

Fig. 7 zeigt nun ein Strukturschaubild, in welchem das System automatisch die Programmbausteine mittels Linien miteinander verbunden hat, wodurch der Programmverlauf und die Programmstruktur verdeutlicht ist. Immer wenn ein weiteres, einen Programmbaustein darstellendes Symbol vom Anwender auf dem Strukturschaubild angelegt wird, erfolgen je nach Typ des neuen Bausteins automatisch die Verbindung zu dem aufrufenden Symbol nach den vorgegebenen Regeln durch das erfindungsgemäße System. Die gezeigten Symbole 22 bis 26 dienen der Darstellung der zugeordneten Programmbausteine.

Entsprechend den obenstehend angegebenen Regeln zum Verknüpfen der Programmbausteine werden die Symbole 22 bis 26 automatisch mit Linien verbunden, sodass der Programmablauf und die Programmstruktur wiedergegeben ist. Die Pfeile in den Verbindungslinien zwischen den Symbolen verdeutlichen den Programmablauf. Die Programmstruktur wird darüber hinaus durch die grundsätzlich vertikale Anordnung der seriell verknüpften Ablaufbausteine 22, 23, 26 und 27 dargestellt, während die parallel arbeitenden Parallelbausteine 25 zum aufrufenden Ablaufbaustein "Einfüllen" horizontal angeordnet sind.

Die Verbindungslinien zu dem Parallelbaustein 25 weist einen grundsätzlich horizontalen Verlauf auf, wobei ein vertikaler Versatz aufgrund der Anordnung der Symbole notwendig ist. Die Verbindungslinien zwischen den Ablaufbausteinen 22, 23, 24, 26 weisen einen grundsätzlich vertikalen Verlauf auf, wobei ein horizontaler Versatz aufgrund der Anordnung der Symbole notwendig ist.

Die Symbole des Strukturschaubildes in Fig. 7 dienen als virtuelle Container für den jeweiligen Programmcodeabschnitt. Der Zugang zu dem Programmcodeabschnitt erfolgt durch Anklicken der Symbole. Es öffnet sich daraufhin ein Fenster, in welchem der Programmcodeabschnitt bearbeitet werden kann.

Das erfindungsgemäße System stellt in der beschriebenen Ausführungsform einen Entwicklungsmodus und einen Laufzeitmodus zur Verfügung, wobei in Letzterem der erstellte Programmcode abgearbeitet wird. Beim Start des Programms wird entsprechend der Darstellung in Fig. 7 zuerst der Programmcodeabschnitt abgearbeitet, welcher dem Symbol 22 des Startbausteins zugehörig ist. Der Ablaufbaustein "Verarbeiten" kann entweder den Ablaufbaustein 23 oder den Ablaufbaustein 24 aufrufen. Hierfür ist im Programmcodeabschnitt des Ablaufbaustein 29 eine bedingte Verzweigung vorgesehen, die dafür sorgt, dass entweder der Ablaufbaustein 23 oder der Ablaufbaustein 24 aufgerufen wird.

Wie in Fig. 7 dargestellt, ruft der Ablaufbaustein 30 bedingt oder unbedingt den einen und/oder den anderen Parallelbaustein 25 auf. Dessen Programmcodeabschnitt wird parallel zu dem Ablauf, der seriellen Programmbausteine abgearbeitet.

Die Parallelbausteine 25 unterscheiden sich von den in herkömmlichen Programmiersprachen bekannten Subprozeduren. Derartige Subprozeduren unterbrechen den Programmablauf. Dagegen wird der Parallelbaustein 25 parallel zu dem aufrufenden Programmteil abgearbeitet und stellt damit ein neuartiges Element dar. Dieser Parallelbaustein kann vorteilhaft bei zeitaufwendigen Vorgängen genutzt werden, die dann parallel ablaufen können. Je nach Anwendung kann dabei der aufrufende Programmbaustein mit dem aufgerufenen Programmbaustein Daten austauschen.

Einer der Ablaufbausteine 23, 24 ruft jeweils, hervorgerufen durch eine Bedingung, den Endbaustein 26 auf oder über die Schleife 27 den Ablaufbaustein 31 auf. Im Endbaustein 26 können Programmteile abgelegt sein, die vor Abschluss des Programmes ausgeführt werden müssen. Ein Softwareentwickler kann vorsehen, dass im Endbaustein 26, die Ergebnisse gespeichert und Reports erzeugt werden. (Fig. 1).

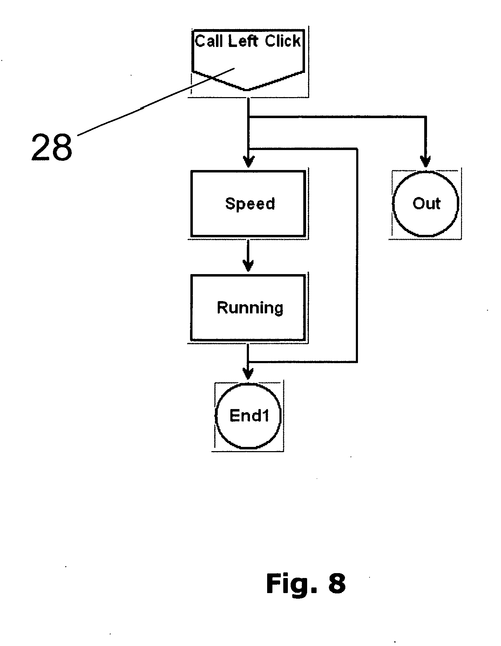

Fig. 8 zeigt ein Strukturschaubild mit einem Ablauf, der durch einen Ereignisbaustein 28 gestartet wird. Der Ereignisbaustein 28 wird durch Ereignisse, die im Programmablauf eintreten können, aufgerufen und kann seinerseits einen Ablaufbaustein, einen Endbaustein oder einen Parallelbaustein aufrufen. Solche Ereignisse können z.B. Bedienhandlungen sein, die durch Anklicken auf Visualisierungsobjekte in Visualisierungsschaubildern ausgelöst werden. Derartige Ereignisse können während der Laufzeit des erstellten Programms jederzeit auftreten.

Der Ereignisbaustein 28 startet einen Ablauf, welcher sich nur durch die Art des Startes von einem Ablauf gemäß Fig. 7 unterscheidet. Während ein in Fig. 7 dargestellter Ablauf in einer Anwendung nur einmal auftreten kann, können Abläufe entsprechend Fig. 8 in beliebiger Anzahl auftreten, die parallel (ereignisabhängig) ausgeführt werden. Diese Abläufe gemäß Fig. 8, welche durch den Ereignisbaustein 28 gestartet werden, arbeiten unabhängig voneinander und auch unabhängig von einem Ablauf gemäß Fig. 7, der durch einen Startbaustein 22 gestartet wird. Hierdurch verdeutlicht sich auch der Unterschied zu den Parallelbausteinen 25. Diese arbeiten zwar auch parallel zu einem Ablauf, werden jedoch von einem Programmbaustein des Typs Ablauf aufgerufen und sind somit diesem Ablauf zugehörig.

## Patentansprüche

1. Computergestütztes Verfahren zur imperativen Programmierung von Computern mit mehreren Programmanweisungen umfassendem Programmcode, wobei Schlüsselworte (Platzhalter) und Auswahllisten (Kontextmenüs) vorgesehen sind, mit einer grafischen Benutzeroberfläche (GUI, Graphical User Interface), **dadurch gekennzeichnet, dass** sich Programmanweisungen aus Operationen und Objekten zusammensetzen, wobei Objekte adressierbar sind sowie Operationen und Objekte aus Auswahllisten ausgewählt werden.

2. Verfahren nach Anspruch 1, **dadurch gekennzeichnet, dass** Operationen auf Daten der Objekte zugreifen und dass die Operationen Objekte und Programmabläufe beeinflussen.

3. Verfahren nach Anspruch 1 oder 2, **dadurch gekennzeichnet, dass** Hauptobjekte, Objekte und Subobjekte vorgesehen sind, wobei Hauptobjekte weitere Hauptobjekte, Objekte und Datensätze (Datenbanken, Dateien) enthalten können, Objekte enthalten Daten, Subobjekte enthalten Daten, wobei Subobjekte entweder einen Bezug zu einem Hauptobjekt, zu einem Objekt oder zu einer Operation haben.

4. Verfahren nach Anspruch 1, 2 oder 3, **dadurch gekennzeichnet, dass** beim Vorgang des Erzeugens einer neuen Anweisung eine Operation aus einer Auswahlliste ausgewählt wird, wodurch ein Anweisungsrohling angezeigt wird, der den Begriff der gewählten Operation enthält sowie Schlüsselworte, mit denen Auswahllisten aufgerufen werden können, wodurch Hauptobjekte oder Objekte und fallweise Subobjekte ausgewählt werden können.

5. Verfahren nach einem der vorhergehenden Ansprüche, **dadurch gekennzeichnet, dass** Gruppen von Operationen zur Auswahl von Operationen verfügbar sind, die Anfragen ermöglichen, Daten Objekten zuweisen können, Hauptobjekten beeinflussen können, Programmabläufe steuern können und das Aussehen von Objekten verändern. können.

6. Verfahren nach einem der vorhergehenden Ansprüche, **dadurch gekennzeichnet, dass** es die Aufgabe der Operationsgruppe "Frage Wenn" ist, Daten von Objekten zu vergleichen, wodurch eine Bedingung abgeleitet wird, in der Weise, dass korrespondierende Anweisungen ausgeführt werden, wenn die Bedingung wahr ist und nicht ausgeführt werden, wenn die Bedingung nicht wahr ist.

7. Verfahren nach einem der vorhergehenden Ansprüche, **dadurch gekennzeichnet, dass** es die Aufgabe der Operationsgruppe Zuweisen ist den Datenaustausch zwischen Objekten zu ermöglichen, deren weitere Aufgaben es sein kann ist, Daten ein Format oder einen Datentyp zuzuweisen.

8. Verfahren nach einem der vorhergehenden Ansprüche, **dadurch gekennzeichnet, dass** es Aufgabe der Operationsgruppe Veranlasse ist, dass Hauptobjekte geöffnet und geschlossen werden können, dass Hauptobjekte angelegt und gelöscht werden können, dass Hauptobjekte gestartet und gestoppt werden können, dass geprüft werden kann, ob Hauptobjekte vorhanden sind, dass Hauptobjekte kopiert und eingefügt werden können, dass Hauptobjekte untereinander Daten austauschen können.

9. Verfahren nach einem der vorhergehenden Ansprüche, **dadurch gekennzeichnet, dass** es Aufgabe der Operationsgruppe Steuere ist, dass Programmbausteine aufgerufen werden können, dass im Programmablauf Wartezyklen vorgesehen werden können, dass Wiederhole Anweisungen (Schleifen) vorgesehen sein können.

10. Verfahren nach einem der vorhergehenden Ansprüche, **dadurch gekennzeichnet, dass** die Operationsgruppe Konfigurieren es ermöglicht, dass Eigenschaften graphischer Objekte wie Grösse, Farbe, sichtbar/unsichtbar verändert werden können, dass Schnittstellen zu anderen Programmen und Fremdgeräten so eingestellt werden können, dass eine Kommunikation ermöglicht wird.

11. Verfahren nach einem der vorhergehenden Ansprüche, **dadurch gekennzeichnet, dass** Auswahllisten für Hauptobjekte und Objekte vorgesehen sind, deren Listenelemente, die ausgewählt werden können, einen Bezug zur ausgewählten Operation haben und die zuvor von einem Softwareentwickler installiert worden sind.

12. Verfahren nach einem der vorhergehenden Ansprüche, **dadurch gekennzeichnet, dass** Auswahllisten für Hauptobjekte und Objekte vorgesehen sind, deren Listenelemente, die ausgewählt werden können, einen Bezug zur ausgewählten Operation haben und die und die vom Sprachdesign vorgegeben sind.

13. Verfahren nach einem der vorhergehenden Ansprüche, **dadurch gekennzeichnet, dass** anstelle einer Auswahlliste, wenn das Objekt eine Datei ist, ein Verzeichnis im Laufzeitmodus angezeigt werden kann, aus dem der Operator eine Datei auswählen kann.

14. Verfahren nach einem der vorhergehenden Ansprüche, **dadurch gekennzeichnet, dass** Blockanweisungen vorgesehen sind mit einer Anfangs- und Endzeile, wobei die Blockanweisung eine Operation und Objekte enthalten, die einen Bezug zu Objekten hat, die in den Anweisungen enthalten sind, die in die Blockanweisung eingefügt werden können.

15. Verfahren nach einem der vorhergehenden Ansprüche, **dadurch gekennzeichnet, dass** unvollständige Anweisungen vorgesehen sein können, die eine Operation, aber keine Objekte enthalten, wobei die Operationin Bezug zu Objekten stehen, die in anderen Anweisungen enthalten sind.

16. Verfahren nach einem der vorhergehenden Ansprüche, **dadurch gekennzeichnet, dass** ein Schlüsselwort (Var) vorgesehen ist, das in seiner Auswahlliste als Objekte Variablen, Konstante, Formeln und Festwerte als Ersatz für das Schlüsselwort enthält.

17. Verfahren nach einem der vorhergehenden Ansprüche, **dadurch gekennzeichnet, dass** dem individuellen Namen eines Objektes, wenn dieses Objekt in einer hierarchischen Struktur eingebunden ist, ein Pfad zugeordnet ist, welcher zusammen mit dem individuellen Namen durch das Ersetzen des Schlüsselwortes in die Anweisung eingefügt wird.

18. Verfahren nach einem der vorhergehenden Ansprüche, **dadurch gekennzeichnet, dass** nach dem Ersetzen eines Schlüsselwortes durch einen Anweisungsabschnitt, in diesem Abschnitt eine markierte Stelle vorgesehen ist, mit der die Auswahlliste wieder aufgerufen werden kann, mit welcher der Anweisungsabschnitt erstellt worden ist.

19. Verfahren nach einem der vorhergehenden Ansprüche, **dadurch gekennzeichnet, dass** Anweisungen in Form von Sequenzen angelegt werden können, wobei die einzelnen Sequenzen mit einem Kommentar (Infozeilen) versehen werden können, wobei die Kommentarzeilen in die Dokumentation des Programmbausteins automatisch aufgenommen werden und die Dokumentation der Programmbausteine automatisch in die Dokumentation des Anwendungsprogramms aufgenommen werden.

20. Verfahren nach einem der vorhergehenden Ansprüche, **dadurch gekennzeichnet, dass** Hauptobjekte in Form von Formularen vorgesehen sind und dass die Reportobjekte wiederum Objekte enthalten, die per Bildschirmdialog aktiviert und konfiguriert werden, die automatisch in die Auswahllisten aufgenommen werden, wodurch sie per Programmanweisungen mit Daten wie Texte, Bilder und Diagramme versehen werden und dass die Daten als Datensätze gespeichert werden.

21. Computergestütztes System zur imperativen Programmierung von Computern mit mehreren Programmanweisungen umfassendem Programmcode, wobei Schlüsselworte (Platzhalter) und Auswahllisten (Kontextmenüs) vorgesehen sind, mit einer grafischen Benutzeroberfläche (GUI, Graphical User Interface), **dadurch gekennzeichnet, dass** Objekte in Form von Eingabebildschirmen (Parameterbildschirmen) vorgesehen sind, und dass auf diesen Bildschirmen Dateneingabeobjekte (z. B. Texteingabe-, Auswahlbox-, Beschriftungsfeld-, Tabellenobjekte) platziert werden, die, sobald sie installiert und mit Eigenschaften versehen sind, automatisch in die Auswahllisten aufgenommen werden, wodurch per Anweisungen auf die eingegebenen Daten zugegriffen werden kann und dass die Eingabedaten in Form von Datensätzen gespeichert werden.

22. System nach einem der vorhergehenden Ansprüche, **dadurch gekennzeichnet, dass** eine Gruppe von Objekten vorgesehen ist, Kanalobjekte genannt (digitale, analoge Ein/Ausgabeobjekte), die automatisch in die Auswahllisten aufgenommen werden, wodurch per Anweisungen auf die Kanalobjekte schreibend (Ausgabeobjekte)und lesend (Eingabeobjekte) zugegriffen werden kann.

23. System nach einem der vorhergehenden Ansprüche, **dadurch gekennzeichnet, dass** globale Objekte vorgesehen sind, die in den Auswahllisten der einzelnen Anwendungen eines Projektes und in einer übergeordneten Anwendung verfügbar sind, wodurch je nach Bestimmung durch den Entwickler, schreibend und lesend auf die Anwendungen des Projektes zugegriffen werden kann.

24. System nach einem der vorhergehenden Ansprüche, **dadurch gekennzeichnet, dass** Programmbausteine (Prozeduren) typisiert sind, mit einem individuellen Namen versehen werden und jedem Typ ein spezielles Symbol zugeordnet ist, wobei die Symbole in Strukturdiagrammen dargestellt werden, und wobei eine Kategorie seriell verbundener Bausteine (Startbaustein, Ereignisbaustein Endbaustein und Ablaufbaustein) vorhanden ist, die chronologisch abgearbeitet werden, und eine Kategorie parallel angeordneter Bausteine (Parallelbausteine) vorgesehen ist, die innerhalb eines Programmablaufes parallel zu anderen Bausteinen abgearbeitet werden und die von einem anderen Baustein aufgerufen werden.

25. System nach einem der vorhergehenden Ansprüche, **dadurch gekennzeichnet, dass** als ein serieller Bausteintyp ein Ereignisbaustein vorgesehen ist, der immer am Beginn eines selbständigen Programmablaufs steht, wenn der Start dieses Programmablaufs durch ein Ereignis ausgelöst wird und der über einen Ausgang verfügt, mit dem ein serieller Baustein vom Typ Ablaufbaustein oder Endbaustein aufgerufen werden kann, und dem weitere Ausgänge hinzugefügt werden können, mit denen Funktionsbausteine aufgerufen werden, und dass der Ereignisbaustein über ein eigenes Symbol im Strukturdiagramm verfügt, das einen Ausgang hat, der mit einem seriellen Baustein verbunden werden kann.

26. System nach einem der vorhergehenden Ansprüche, **dadurch gekennzeichnet, dass** als ein serieller Bausteintyp ein Startbaustein vorgesehen ist, der immer am Beginn eines selbständigen Programmablaufs steht, wenn der Start dieses Programmablaufs durch eine manuelle Massnahme wie eine Maus- oder Tastaturbedienung oder durch einen Autostart erfolgt, wenn dies im Betriebssystem des PC so eingerichtet ist, und der über einen Ausgang verfügt, mit dem ein serieller Baustein vom Typ Ablaufbaustein oder Endbaustein aufgerufen werden kann, und dem weitere Ausgänge hinzugefügt werden können, um Parallelbausteine aufzurufen, und dass der Startbaustein über ein eigenes Symbol im Strukturdiagramm verfügt, das einen Ausgang hat, mit dem ein serieller Baustein verbunden werden kann.

27. System nach einem der vorhergehenden Ansprüche, **dadurch gekennzeichnet, dass** als serielle Bausteintypen ein Ablaufbaustein und ein Endbaustein vorgesehen sind, wobei der Ablaufbaustein immer zwischen zwei seriellen Bausteinen angeordnet ist, und der über einen Eingang verfügt, mit dem dieser Baustein von einen anderen seriellen Baustein (Start-, Ereignis- oder Ablaufbaustein) aufgerufen werden kann, und der über einen Ausgang verfügt, mit dem ein serieller Baustein vom Typ Ablaufbaustein oder Endbaustein aufgerufen werden kann, wobei der Endbaustein am Ende eines Ablaufs angeordnet ist, und der über einen Eingang verfügt, mit dem dieser Baustein von einen anderen seriellen Baustein (Start-, Ereignis- oder Ablaufbaustein) aufgerufen werden kann, wobei den Ablaufbausteinen und Endbausteinen weitere Ausgänge hinzugefügt werden können, mit denen Parallelbausteine aufgerufen werden, und dass die Bausteine über eigene Symbole im Strukturdiagramm verfügen.

28. System nach einem der vorhergehenden Ansprüche, **dadurch gekennzeichnet, dass** als ein paralleler Bausteintyp ein Parallelbaustein vorgesehen ist, der immer über einen Eingang verfügt, mit dem dieser Baustein von einen anderen Baustein (Start-, Ereignis-, Ablauf-, End-, oder Parallelbaustein) aufgerufen werden kann, und dessen Programmanweisungen unabhängig von dem aufrufenden Baustein abgearbeitet werden, und der über ein eigenes Symbol im Strukturdiagramm verfügt, das über einen Eingang verfügt mit dem der Baustein mit einem anderen Baustein verbunden werden kann.

29. System nach einem der vorhergehenden Ansprüche, **dadurch gekennzeichnet, dass** voneinander unabhängige Programmabläufe in beliebiger Zahl vorgesehen werden, die parallel ablaufen, wobei ein Ablauf durch einen Startbaustein gestartet wird und weitere Abläufe in beliebiger Zahl durch Ereignisbausteine (18, 28) gestartet werden.

30. System nach einem der vorhergehenden Ansprüche, **dadurch gekennzeichnet, dass** den Typen der Programmbausteine normierte Symbole (17 bis 21) zugeordnet sind, dass diese Symbole in einem Strukturdiagramm (Figur 7 und Figur 8) nach festen Regeln mit Linien verbunden werden, wodurch die Programmstruktur und sich der Programmablauf widerspiegelt.

31. System nach einem der vorhergehenden Ansprüche, **dadurch gekennzeichnet, dass** Schleifen (27) vorgesehen sein können, die es ermöglichen Programmbausteine mehrfach zu durchlaufen.
